# EUROPEAN PATENT APPLICATION

(11) **EP 4 618 644 A1**
(43) Date of publication of application: **17.09.2025**
(21) Application number: 23896442.3
(22) Date of filing: 02.11.2023
(51) Int. Cl.: H04W 60/00

(54) **NETWORK ACCESS METHOD AND COMMUNICATION APPARATUS**

(30) Priority: 01.12.2022 CN 202211538565
(71) Applicant: Huawei Technologies Co., Ltd., Shenzhen, Guangdong 518129 (CN)
(72) Inventor: MA, Chunyan, Shenzhen, Guangdong 518129 (CN); DING, Hui, Shenzhen, Guangdong 518129 (CN)
(74) Representative: Pfenning, Meinig & Partner mbB
(86) International application number: PCT/CN2023/129336
(87) International publication number: WO 2024/114288

(57) **Abstract**

Embodiments of this application provide a network access method and a communication apparatus, so that a terminal device can access a proper core network. According to the method provided in embodiments of this application, an access gateway connected to an access management network element in a public core network and an access management network element in a dedicated core network is introduced, so that when determining the proper core network that provides a service for the terminal device, the access gateway can route a registration request of the terminal device to an access management network element included in the core network that provides the service for the terminal device. In this way, the terminal device accesses the proper core network.

## Description

This application claims priority to Chinese Patent Application No. 202211538565.6, filed with the China National Intellectual Property Administration on December 1, 2022 and entitled "NETWORK ACCESS METHOD AND COMMUNICATION APPARATUS", which is incorporated herein by reference in its entirety.

### TECHNICAL FIELD

Embodiments of this application relate to the field of wireless communication technologies, and more specifically, to a network access method and a communication apparatus.

### BACKGROUND

In some communication scenarios, to support provision of network services for both a public network subscriber and a dedicated network subscriber, an operator may deploy a shared base station for a public network and a dedicated network, for the public network subscriber to access the public network via the shared base station and the dedicated network subscriber to access the dedicated network via the shared base station.

It is known that, in a process in which a terminal device accesses a core network over an access network (access network, AN), the AN first needs to perform access and mobility management function (access and mobility management function, AMF) selection, and finally registers the terminal device with the core network via an AMF, to complete the access. According to a current communication protocol, the AN performs initial AMF selection mainly based on a public land mobile network identifier (public land mobile network identifier, PLMN ID), a location of user equipment (user equipment, UE), a list of network slices requested by the UE, and a local operator policy. However, in the foregoing information, the PLMN ID, the location of the UE, and the local operator policy temporarily cannot support the AN in distinguishing between the public network subscriber and the dedicated network subscriber. In addition, network slice support capabilities of UEs on a live network vary, and some UEs are incapable of carrying network slice information. As a result, the AN cannot select correct core networks for the dedicated network subscriber and the public network subscriber. For example, the AN may select a public network AMF to provide a network service for the dedicated network subscriber, or may select a dedicated network AMF to provide a network service for the public network subscriber.

### SUMMARY

Embodiments of this application provide a network access method and a communication apparatus, to support access of a terminal device to a proper core network.

According to a first aspect, a network access method is provided. The method may be performed by an access gateway, or may be performed by a component (for example, a chip or a circuit) of the access gateway. This is not limited. For ease of description, the following uses an example in which the method is performed by the access gateway for description.

The method includes: An access gateway receives a first message from an access network device, where the first message includes a registration request of a terminal device, and the registration request includes an identifier of the terminal device; the access gateway determines, based on the first message, a first core network that provides a service for the terminal device, where the first core network is a public core network or a dedicated core network; and the access gateway sends a second message to a first access management network element included in the first core network, where the second message includes the registration request.

Based on the foregoing technical solution, when there is a communication interface between the access network device and the access gateway, the access gateway may receive the first message from the access network device, and then the access network device may select a correct network (namely, the first core network) for the terminal device based on the first message, and route the registration request of the terminal device to the first access management network element included in the first core network. In this way, the terminal device can access the first core network.

With reference to the first aspect, in some implementations of the first aspect, the first core network is the dedicated core network, and that the access gateway determines, based on the first message, a first core network that provides a service for the terminal device includes: When determining, based on the identifier of the terminal device, that the identifier of the terminal device is allocated by a second access management network element to the terminal device, the access gateway determines that the first core network provides the service for the terminal device, where the second access management network element belongs to the first core network.

With reference to the first aspect, in some implementations of the first aspect, that the access gateway determines, based on the first message, a first core network that provides a service for the terminal device includes: When determining, based on the identifier of the terminal device, that the first core network stores subscription data of the terminal device, the access gateway determines that the first core network provides the service for the terminal device.

With reference to the first aspect, in some implementations of the first aspect, that the access gateway determines, based on the first message, a first core network that provides a service for the terminal device includes: The access gateway determines, based on the identifier of the terminal device, that the first core network stores subscription data of the terminal device, where the subscription data includes type information of the terminal device, and the type information indicates that the terminal device is of a public network subscriber type or a dedicated network subscriber type; and when determining, based on the type information, that the terminal device belongs to a subscriber type of the first core network, the access gateway determines that the first core network provides the service for the terminal device.

With reference to the first aspect, in some implementations of the first aspect, the first message further includes location information of the terminal device, the location information includes information about a tracking area and/or information about a cell on which the terminal device camps, the access gateway is configured with one or more of a tracking area identifier list of the first core network and a new radio cell global identifier list of the first core network, and that the access gateway determines, based on the first message, a first core network that provides a service for the terminal device includes: When the terminal device determines, based on the identifier of the terminal device, that the first core network stores subscription data of the terminal device, and the tracking area in the location information of the terminal device is included in the tracking area identifier list of the first core network, or the cell in the location information of the terminal device is included in the new radio cell global identifier list of the first core network, the access gateway determines that the first core network provides the service for the terminal device.

With reference to the first aspect, in some implementations of the first aspect, the first message further includes an identifier of a network slice requested by the terminal device, the access gateway is configured with a list of identifiers of network slices supported by the first core network, and that the access gateway determines, based on the first message, a first core network that provides a service for the terminal device includes: When determining, based on the identifier of the terminal device, that the first core network stores subscription data of the terminal device, and determines, based on the identifier of the network slice requested by the terminal device, that the identifier of the network slice is included in the list of identifiers of network slices supported by the first core network, the access gateway determines that the first core network provides the service for the terminal device.

With reference to the first aspect, in some implementations of the first aspect, the method further includes: The access gateway sends a first request message to a first policy management network element or a first data management network element, where the first request message includes the identifier of the terminal device, and the first request message is used to query whether the terminal device has subscribed to the first core network; and the access gateway receives a response message from the first policy management network element or the first data management network element, where the response message indicates that the terminal device has subscribed to the first core network.

Based on the foregoing technical solution, the access gateway may request the first policy management network element or the first data management network element to query whether the terminal device has subscribed to the first core network, so as to determine whether the first core network stores the subscription data of the terminal device.

With reference to the first aspect, in some implementations of the first aspect, the method further includes: The access gateway sends a second request message to a first policy management network element or a first data management network element, where the second request message includes the identifier of the terminal device, and the second request message is used to request the type information of the terminal device; and the access gateway receives the type information of the terminal device from the first policy management network element or the first data management network element.

Based on the foregoing technical solution, the access gateway may request to obtain the type information of the terminal device from the first policy management network element or the first data management network element, so as to determine whether the first core network provides the service for the terminal device.

With reference to the first aspect, in some implementations of the first aspect, the access gateway is configured with a subscriber list of the first core network, and that the access gateway determines, based on the first message, a first core network that provides a service for the terminal device includes: When determining, based on the identifier of the terminal device and the subscriber list of the first core network, that the terminal device is a subscriber of the first core network, the access gateway determines that the first core network provides the service for the terminal device.

For example, the subscriber list of the first core network may be a number segment of the subscriber of the first core network. The number segment of the subscriber may be one or more of the following: a subscription permanent identifier (subscription permanent identifier, SUPI) number segment, an international mobile subscriber identifier (international mobile subscriber identifier, IMSI) number segment, a routing indicator (routing indicator, RI) number segment in a subscription concealed identifier (subscription concealed identifier, SUCI), or a home network public key identifier (home network public key identifier, HNPK ID) number segment in an SUCI.

According to a second aspect, a network access method is provided. The method may be performed by an access gateway, or may be performed by a component (for example, a chip or a circuit) of the access gateway. This is not limited. For ease of description, the following uses an example in which the method is performed by the access gateway for description.

The method includes: An access gateway receives a third message from a first access management network element, where the third message includes an identifier of a terminal device, and the first access management network element belongs to a first core network; and the third message is a registration reject message, or the third message includes a registration request of the terminal device, and the registration request includes the identifier of the terminal device; and the access gateway sends a fourth message to a third access management network element based on the third message, where the fourth message includes the registration request of the terminal device, and the third access management network element belongs to a second core network.

Based on the foregoing technical solution, if the access gateway receives the third message from the first access management network element, the access gateway may determine that the terminal device is not suitable for accessing the first core network, and then the access gateway may route the registration request of the terminal device to the second core network, so that the terminal device is connected to a proper core network.

With reference to the second aspect, in some implementations of the second aspect, the third message is the registration reject message, and before the access gateway receives the third message from the first access management network element, the method further includes: The access gateway receives a first message from an access network device, where the first message includes the registration request of the terminal device, and the registration request includes the identifier of the terminal device; the access gateway sends the fourth message to the first access management network element based on the first message, where the fourth message includes the registration request; the access gateway stores the fourth message; and that the access gateway sends a fourth message to a third access management network element based on the third message includes: The access gateway sends, based on the identifier of the terminal device included in the third message, the fourth message stored by the access gateway to the third access management network element.

With reference to the second aspect, in some implementations of the second aspect, the third message further includes a reject cause value, and the reject cause value indicates that the terminal device is not a subscriber of the first core network.

With reference to the second aspect, in some implementations of the second aspect, the third message includes the registration request of the terminal device, the third message further includes location information of the terminal device, the location information includes information about a tracking area and/or information about a cell on which the terminal device camps, the access gateway is configured with one or more of a tracking area identifier list of the second core network and a new radio cell global identifier list of the second core network, and that the access gateway sends a fourth message to a third access management network element based on the third message includes: When the tracking area in the location information of the terminal device is included in the tracking area identifier list of the second core network, or the cell in the location information of the terminal device is included in the new radio cell global identifier list of the second core network, the access gateway sends the fourth message to the third access management network element.

With reference to the second aspect, in some implementations of the second aspect, the third message includes the registration request of the terminal device, the third message further includes an identifier of a network slice requested by the terminal device, the access gateway is configured with a list of identifiers of network slices supported by the second core network, and that the access gateway sends a fourth message to a third access management network element based on the third message includes: When determining, based on the identifier of the network slice requested by the terminal device, that the identifier of the network slice is included in the list of identifiers of network slices supported by the first core network, the access gateway sends the fourth message to the third access management network element.

With reference to the second aspect, in some implementations of the second aspect, the third message includes the registration request of the terminal device, and the third message further includes one or more of the following: an identifier of the second core network; an identifier of a network slice of the second core network; and an access management network element set identifier, where the access management network element set identifier is used by the access gateway to determine the second core network; and that the access gateway sends a fourth message to a third access management network element based on the third message includes: When determining the third access management network element based on the third message, the access gateway sends the fourth message to the third access management network element.

According to a third aspect, a network access method is provided. The method may be performed by a first access management network element, or may be performed by a component (for example, a chip or a circuit) of the first access management network element. This is not limited. For ease of description, the following uses an example in which the method is performed by the first access management network element for description.

The method includes: A first access management network element receives a fourth message, where the fourth message includes a registration request of a terminal device, the registration request of the terminal device includes an identifier of the terminal device, and the first access management network element belongs to a first core network; and when determining that the terminal device is not a subscriber of the first core network, the first access management network element sends a third message to an access gateway, where the third message includes the identifier of the terminal device, and the third message is a registration reject message, or the third message further includes the registration request of the terminal device.

Based on the foregoing technical solution, after receiving the registration request of the terminal device, if the first access management network element determines that the terminal device is not the subscriber of the first core network, the first access management network element sends the third message to the access gateway, so that the access gateway routes the registration request of the terminal device to the second core network based on the third message. In this way, the terminal device accesses a proper core network.

With reference to the third aspect, in some implementations of the third aspect, the third message is the registration reject message, and that a first access management network element receives a fourth message includes: The first access management network element receives the fourth message from the access gateway.

With reference to the third aspect, in some implementations of the third aspect, the third message further includes a reject cause value, and the reject cause value indicates that the terminal device is not the subscriber of the first core network.

With reference to the third aspect, in some implementations of the third aspect, the third message further includes the registration request of the terminal device, and that a first access management network element receives a fourth message includes: The first access management network element receives the fourth message from an access network device.

With reference to the third aspect, in some implementations of the third aspect, the third message further includes one or more of the following: location information of the terminal device, where the location information includes information about a tracking area and/or information about a cell on which the terminal device camps; and an identifier of a network slice requested by the terminal device.

According to a fourth aspect, a communication apparatus is provided. The communication apparatus has functions of implementing the method according to any one of the first aspect, the second aspect, or the possible implementations of these aspects. The function may be implemented by hardware, or may be implemented by hardware executing corresponding software. The hardware or the software includes one or more units corresponding to the foregoing functions.

According to a fifth aspect, a communication apparatus is provided. The communication apparatus has functions of implementing the method in any one of the third aspect or the possible implementations of the third aspect. The function may be implemented by hardware, or may be implemented by hardware executing corresponding software. The hardware or the software includes one or more units corresponding to the foregoing functions.

According to a sixth aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the first aspect, the second aspect, or the possible implementations of these aspects.

According to a seventh aspect, a communication apparatus is provided, and includes a processor and a memory. Optionally, the communication apparatus may further include a transceiver. The memory is configured to store a computer program. The processor is configured to: invoke and run the computer program stored in the memory, and control the transceiver to receive and send a signal, to enable the communication apparatus to perform the method according to any one of the third aspect or the possible implementations of the third aspect.

According to an eighth aspect, a communication apparatus is provided, and includes a processor and a communication interface. The communication interface is configured to: receive data and/or information, and transmit the received data and/or information to the processor. The processor processes the data and/or the information. In addition, the communication interface is further configured to output data and/or information that are/is obtained through processing by the processor, so that the method according to any one of the first aspect, the second aspect, or the possible implementations of these aspects is performed.

According to a ninth aspect, a communication apparatus is provided, and includes a processor and a communication interface. The communication interface is configured to receive data and/or information, and transmit the received data and/or information to the processor. The processor processes the data and/or the information. In addition, the communication interface is further configured to output data and/or information obtained through processing by the processor, so that the method according to any one of the third aspect or the possible implementations of the third aspect is performed.

According to a tenth aspect, a communication apparatus is provided, and includes at least one processor. The at least one processor is coupled to at least one memory, and the at least one processor is configured to execute a computer program or instructions stored in the at least one memory, so that the communication apparatus performs the method according to any one of the first aspect, the second aspect, or the possible implementations of these aspects.

According to an eleventh aspect, a communication apparatus is provided, and includes at least one processor. The at least one processor is coupled to at least one memory, and the at least one processor is configured to execute a computer program or instructions stored in the at least one memory, so that the communication apparatus performs the method according to any one of the third aspect or the possible implementations of the third aspect.

According to a twelfth aspect, a computer-readable storage medium is provided. The computer-readable storage medium stores computer instructions. When the computer instructions are run on a computer, the method according to any one of the first aspect to the third aspect, or the possible implementations of these aspects is performed.

According to a thirteenth aspect, a computer program product is provided. The computer program product includes computer program code. When the computer program code is run on a computer, the method according to any one of the first aspect to the third aspect, or the possible implementations of these aspects is performed.

According to a fourteenth aspect, a wireless communication system is provided, and includes a communication apparatus configured to perform the method in the first aspect or a communication apparatus configured to perform the method in the second aspect, and a communication apparatus configured to perform the method in the third aspect.

### BRIEF DESCRIPTION OF DRAWINGS

FIG. 1 is a diagram of a communication scenario applicable to technical solutions of this application;
FIG. 2 is a diagram of a network architecture applicable to an embodiment of this application;
FIG. 3 is a diagram of a communication system according to an embodiment of this application;
FIG. 4 is a schematic flowchart of a method according to an embodiment of this application.
FIG. 5 is a diagram of a structure of an SUCI;
FIG. 6 is another schematic flowchart of a method according to an embodiment of this application;
FIG. 7 is another schematic flowchart of a method according to an embodiment of this application;
FIG. 8 is another schematic flowchart of a method according to an embodiment of this application;
FIG. 9 is another schematic flowchart of a method according to an embodiment of this application;
FIG. 10 is another schematic flowchart of a method according to an embodiment of this application;
FIG. 11 is a diagram of a communication apparatus according to an embodiment of this application;
FIG. 12 is a schematic block diagram of a communication apparatus according to another embodiment of this application; and
FIG. 13 is a diagram of a chip system according to an embodiment of this application.

### DESCRIPTION OF EMBODIMENTS

The following describes technical solutions in embodiments of this application with reference to accompanying drawings.

The technical solutions in embodiments of this application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, a new radio (New Radio, NR) system, a 6th generation (6th Generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a sidelink (sidelink, SL) communication system, a machine to machine (machine to machine, M2M) communication system, an internet of things (internet of things, IoT) communication system, a vehicle to everything (vehicle to everything, V2X) communication system, an unmanned aerial vehicle (uncrewed aerial vehicle, UAV), or another communication system.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one (piece) of a, b, or c may represent: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute any limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

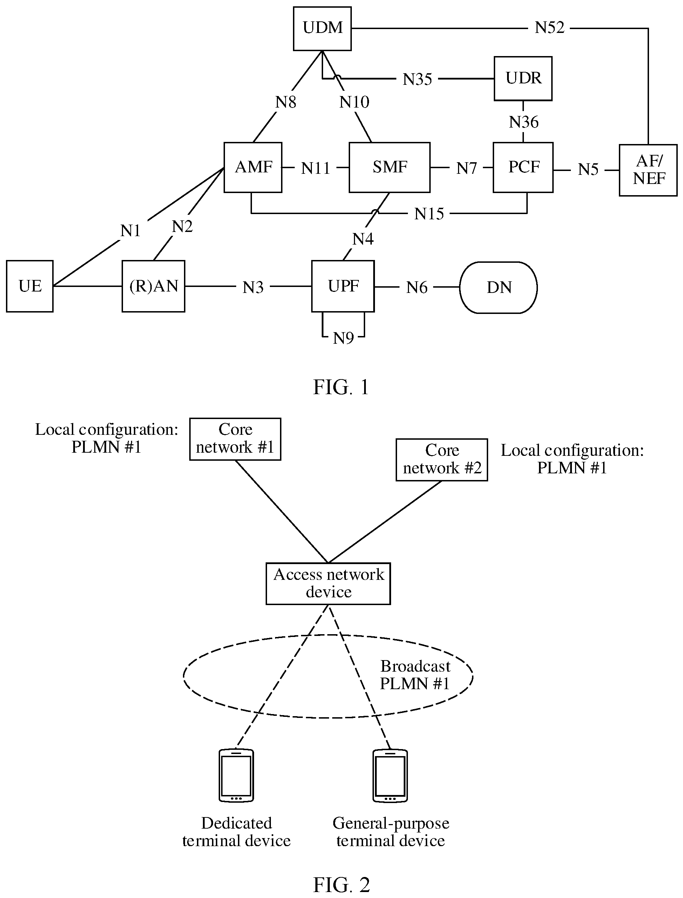

For ease of understanding of embodiments of this application, an application scenario of embodiments of this application is first described in detail with reference to FIG. 1.

A communication system shown in FIG. 1 may include the following devices and/or network elements:
1. User equipment (user equipment, UE) may be referred to as a terminal device, a terminal, an access terminal, a subscriber unit, a subscriber station, a mobile station, a mobile console, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital processor (personal digital assistant, PDA), a handheld device having a wireless communication function, a computing device or another processing device connected to a wireless modem, a vehicle-mounted device, an uncrewed aerial vehicle, a wearable device, a terminal device in a 5G network, a terminal device in an evolved PLMN, or the like. This is not limited in embodiments of this application.
2. An access network (access network, AN) provides a network access function for an authorized user in a specific area, and can use transmission tunnels with different quality based on user levels, service requirements, and the like. The access network may be an access network using different access technologies. Conventional access network technologies include: a radio access network technology used in a 3rd generation (3rd generation, 3G) system, a radio access network technology used in a 4th generation (4th generation, 4G) system, or a next generation radio access network (next generation radio access network, NG-RAN) technology (for example, a radio access technology used in a 5G system).

An access network that implements an access network function based on a wireless communication technology may be referred to as a radio access network (radio access network, RAN). The radio access network can manage radio resources, provide an access service for a terminal, and further complete forwarding of a control signal and user data between the terminal and a core network.

The radio access network device may be, for example, a base station (NodeB), an evolved NodeB (evolved NodeB, eNB or eNodeB), a next generation node base station (next generation Node Base station, gNB) in a 5G mobile communication system, a base station in a future mobile communication system, an access point (access point, AP) in a Wi-Fi wireless hotspot system, or the like, or may be a radio controller in a cloud radio access network (cloud radio access network, CRAN) scenario. The radio access network device may alternatively be a relay station, an access point, a vehicle-mounted device, an uncrewed aerial vehicle, a wearable device, a network device in a 5G network, a network device in an evolved PLMN, or the like. A specific technology used by the radio access network device and a specific device form are not limited in embodiments of this application.

3. An access management network element is mainly used for mobility management and access management, is responsible for transferring user policies between user equipment and a policy control function (policy control function, PCF) network element and the like, and optionally, may be configured to implement functions other than session management in a mobility management entity (mobility management entity, MME) function, for example, an access authorization (authentication) function.

In a 4G communication system, the access management network element may be an MME. In a 5G communication system, the access management network element may be an access and mobility management function (access and mobility management function, AMF) network element. In a future communication system, the access management network element may still be the AMF network element, or may have another name. This is not limited in this application.

4. A session management network element is mainly configured for session management, user equipment internet protocol (internet protocol, IP) address allocation and management, selection of manageable user plane functions, termination of interfaces towards policy control and charging, perform downlink data communication, and the like.

In a 4G communication system, the session management network element may be a serving gateway (serving gateway, SGW) function and/or a packet data network gateway (packet data network gateway, PGW) function. In a 5G communication system, the session management network element may be a session management function (session management function, SMF) network element. In a future communication system, the session management network element may still be the SMF network element, or may have another name. This is not limited in this application.

5. A user plane network element is configured for packet routing and forwarding, quality of service (quality of service, QoS) handling for user plane data, user plane data forwarding, session/flow-level charging statistics collection, a bandwidth limiting function, and the like.

In a 4G communication system, the user plane network element may be an SGW and/or a PGW. In a 5G communication system, the user plane network element may be a user plane function (user plane function, UPF) network element. In a future communication system, the user plane network element may still be the UPF network element, or may have another name. This is not limited in this application.

6. A data network element is configured to provide a network for data transmission.

In a 4G communication system and a 5G communication system, the data network element may be a data network (data network, DN) network element. In a future communication system, the data network element may still be the DN network element, or may have another name. This is not limited in this application.

7. A policy control network element is mainly responsible for session- and service flow-level charging, QoS bandwidth guarantee, mobility management, UE policy decision-making, and other policy control functions.

In a 4G communication system, the policy control network element may be a policy and charging rules function (policy and charging rules function, PCRF) network element. In a 5G communication system, the policy control network element may be a policy control function (policy control function, PCF) network element. Optionally, PCFs connected to an AMF and an SMF respectively correspond to an AM PCF (PCF for access and mobility control) and an SM PCF (PCF for session management), and may not be a same PCF entity in an actual deployment scenario.

In a future communication system, the policy control network element may still be the PCF network element, or may have another name. This is not limited in this application.

8. A data management network element is mainly responsible for user identifier management, subscription data management, authentication data management, user access authorization management, and the like.

In a 4G communication system, the data management network element may be a home subscriber server (home subscriber server, HSS) network element. In a 5G communication system, the data management network element may be a unified data management (unified data management, UDM) network element. In a future communication system, the data management network element may still be the UDM network element, or may have another name. This is not limited in this application.

9. A network exposure function (network exposure function, NEF) network element is configured for secure exposure of capabilities and services provided by 3rd generation partnership project (3rd generation partnership project, 3GPP) network functions.

10. An application function (application function, AF) network element mainly transfers a requirement of an application side on a network side, for example, a QoS requirement or user status event subscription. The AF may be a third-party function entity, or may be an operator-deployed application service, for example, an internet protocol multimedia subsystem (IP protocol multimedia subsystem, IMS) voice call service. When interacting with a core network, an application function entity of the third-party application may further perform authorization processing via an NEF. For example, the third-party application function directly sends a request message to the NEF, and the NEF determines whether the AF is allowed to send the request message. If verification succeeds, the NEF forwards the request message to a corresponding PCF or UDM.

11. A unified data repository (unified data repository, UDR) is mainly responsible for storage and retrieval of subscription data, policy data, application data, and other types of data, and the like.

Functions of interfaces between the network elements in FIG. 1 are described as follows:
(1) N1 is an interface between the AMF and the terminal, and may be configured to transfer QoS control rules or the like to the terminal.
(2) N2 is an interface between the AMF and the RAN, and may be used for transferring radio bearer control information or the like from a core network side to the RAN.
(3) N3 is an interface between the RAN and the UPF, and is mainly configured to transfer uplink and downlink user plane data between the RAN and the UPF.
(4) N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5 is an interface between the AF and the PCF, and may be configured to deliver an application service request and report a network event.
(6) N6 is an interface between the UPF and the DN, and is configured to transfer uplink and downlink user data flows between the UPF and the DN.
(7) N7 is an interface between the PCF and the SMF, and may be configured to deliver control policies at a protocol data unit (protocol data unit, PDU) session granularity and a service data flow granularity.
(8) N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9 is a user plane interface between UPFs, and is configured to transfer uplink and downlink user data flows between the UPFs.
(10) N10 is an interface between the SMF and the UDM, and may be used by the SMF to obtain session management-related subscription data from the UDM, used by the SMF to register current session-related information of the terminal with the UDM, and the like.
(11) N11 is an interface between the SMF and the AMF, and may be configured to transfer PDU session tunnel information between the RAN and the UPF, transfer a control message sent to the terminal, transfer radio resource control information sent to the RAN, and the like.
(12) N15 is an interface between the PCF and the AMF, and may be configured to deliver a terminal policy and an access control-related policy.
(13) N35 is an interface between the UDM and the UDR, and may be used by the UDM to obtain user subscription data information from the UDR.
(14) N36 is an interface between the PCF and the UDR, and may be used by the PCF to obtain policy-related subscription data and application data-related information from the UDR.
(15) N52 is an interface between the UDM and the NEF, and is used by the NEF to expose a network capability to a third-party application function. For example, the third-party application function subscribes to reachability events of all users in a specific group from the UDM via the NEF.

The foregoing network elements or functions may be network elements in a hardware device, may be software functions running on dedicated hardware, or may be virtualized functions instantiated on a platform (for example, a cloud platform). Optionally, the network element or function may be implemented by one device, or may be jointly implemented by a plurality of devices, or may be a functional module in one device. This is not specifically limited in embodiments of this application.

In addition, the foregoing "network element" may also be referred to as an entity, a device, an apparatus, a module, or the like. This is not particularly limited in this application. In addition, for ease of understanding and description, a description of the "network element" is omitted in some descriptions below. For example, an AMF network element is briefly referred to as an AMF. In this case, the "AMF" should be understood as an AMF network element or an AMF entity. Descriptions of same or similar cases are omitted below.

It should be understood that FIG. 1 is merely an example of a network architecture, and a network architecture applicable to embodiments of this application is not limited thereto. Any network architecture that can implement functions of the foregoing network elements is applicable to embodiments of this application. For example, in some network architectures, network functional entities such as an AMF, an SMF, a PCF, and a UDM are all referred to as network function (network function, NF) network elements; or in some other network architectures, a set of network elements such as an AMF, an SMF, a PCF, and a UDM may be referred to as control plane function (control Plane function, CPF) network elements.

Based on the network architecture described in FIG. 1, the following introduces a technical problem to be resolved in this application and technical solutions of this application.

FIG. 2 is a diagram of a communication scenario applicable to technical solutions of this application. To support provision of network services for both a public network subscriber and a dedicated network subscriber, an operator may deploy a shared base station, for example, a gNB, for a public network and a dedicated network, for the public network subscriber to access the public network via the shared base station and the dedicated network subscriber to access the dedicated network via the shared base station. As shown in FIG. 2, a core network #1 and a core network #2 share an access network device. The core network #1 and the core network #2 each are locally configured with a PLMN #1. In other words, the core network #1 and the core network #2 are deployed by a same operator. A PLMN ID broadcast by the access network device is the PLMN #1. A general-purpose terminal device in FIG. 2 represents a terminal device that supports access only to a public core network, and a dedicated terminal device represents a terminal device that supports access to a dedicated core network. Optionally, the dedicated terminal device may also support access to a public core network. For example, the core network #1 is a public core network, and the core network #2 is a campus network, for example, an enterprise campus or a mine campus.

According to a current communication protocol, a 5G AN performs initial (initial) AMF selection based on the following information: a PLMN ID, a location of UE, a list of network slices requested by the UE, which is usually identified as requested NSSAI, where the NSSAI represents network slice assistance information (network slice selection assistance information), and a local operator policy.

In the foregoing information, the 5G AN temporarily cannot distinguish between a public network subscriber and a dedicated network subscriber based on the information such as the PLMN ID, the location of the UE, and the local operator policy. However, some UEs on a live network are incapable of carrying network slice information. Therefore, currently, the 5G AN cannot support in distinguishing between the public network subscriber and the dedicated network subscriber. Therefore, when a public network and a dedicated network share an access network device, the AN cannot ensure that a correct core network is selected for the dedicated network subscriber or the public network subscriber. For example, the dedicated network is a campus network. If a public core network and the campus network share a base station, the public network subscriber or a subscriber of the campus network initiates a registration procedure. After receiving a registration request of the UE, the shared base station selects an initial AMF based on the foregoing information, and forwards the registration request to an AMF (namely, the selected initial AMF) of a corresponding core network, that is, forwards the registration request to the corresponding core network. However, as described above, because the AN cannot distinguish between the public network subscriber and the dedicated network subscriber, the shared base station may forward the registration request of the UE to an AMF in an unsuitable core network. In other words, the shared base station may select, for the UE, the AMF in the unsuitable core network to provide a network service. For example, the access network device selects an AMF in a campus network for a public network subscriber, selects an AMF in a public network for a campus subscriber suitable for accessing a campus network, or selects an AMF in a campus network for a campus subscriber suitable for accessing a public core network.

If the foregoing case occurs, after the AMF in the campus network or the AMF in the public network receives a registration request of a subscriber, access of the subscriber may be rejected, leading to some problems. For example, efficiency of accessing the core network by the UE is reduced, or the terminal device cannot access the network for a long time.

In this current situation, this application provides a network access method, which is applicable to a communication scenario in which a public core network and a dedicated core network are deployed to share an access network device, and a terminal device (for example, a public network subscriber or a dedicated network subscriber) may be connected to a proper core network.

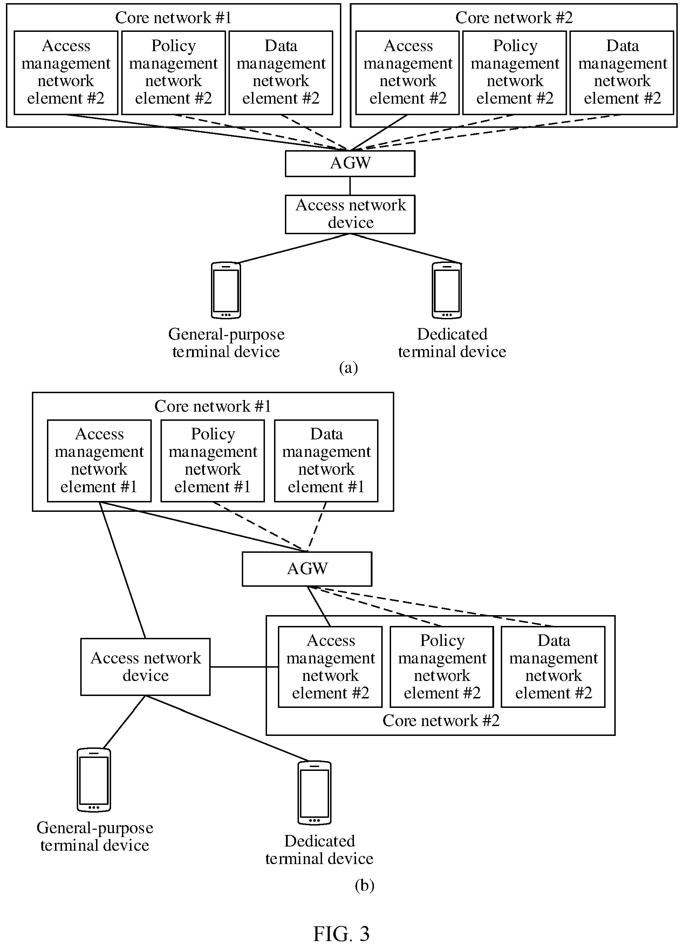

For ease of understanding of embodiments of this application, a diagram of a communication system provided in an embodiment of this application is first described in detail with reference to FIG. 3.

As shown in FIG. 3, the communication system provided in this embodiment of this application includes a core network #1, a core network #2, an access gateway (access gateway, AGW), an access network device, a general-purpose terminal device, and a dedicated terminal device.

The core network #1 is a public core network, and the core network #1 may include a 5G core network (5G core network, 5GC), an evolved packet core (evolved packet core, EPC) network, a second generation (2nd generation, 2G) core network, or a third generation (3rd generation, 3G) core network.

The core network #2 is a dedicated core network, and the core network #2 may include a 5GC, an EPC, a 2G core network, or a 3G core network.

The access network device may include a NodeB, an eNB, a gNB, or the like. For example, if both the core network #1 and the core network #2 are 5GCs, the access network device may be a gNB. For another example, if the core network #1 includes a 5GC and an EPC, and the core network #2 includes a 5GC and an EPC, the access network device may include an eNB and a gNB.

The AGW is configured to assist a subscriber in performing network selection. The AGW may be integrated with other network elements. For example, the AGW is integrated with a routing agent node (diameter routing agent, DRA) or a security gateway. Alternatively, the AGW may be independently deployed. This is not limited in embodiments of this application.

A connection relationship between the AGW and another device in the communication system is not limited in embodiments of this application.

As shown in (a) in FIG. 3, the AGW may be connected to an access network device. For example, if the access network device includes a gNB, the AGW is connected to the gNB through an N2 interface. If the access network device includes an eNB, the AGW is connected to the eNB through an S1-MME interface. The AGW is further connected to an access management network element #1 in a core network #1. For example, if the access management network element #1 is an AMF, the AGW is connected to the AMF in the core network #1 through the N2 interface. If the access management network element #1 is an MME, the AGW is connected to the MME in the core network #1 through the S1-MME interface. The AGW is further connected to an access management network element #2 in a core network #2. For example, if the access management network element #2 is an AMF, the AGW is connected to the AMF in the core network #2 through the N2 interface. If the access management network element #2 is an MME, the AGW is connected to the MME in the core network #2 through the S1-MME interface.

As shown in (b) in FIG. 3, the AGW is connected to an access management network element #1 in a core network #1. For example, if the access management network element #1 is an AMF, the AGW is connected to the AMF in the core network #1 through an N2 interface. If the access management network element #1 is an MME, the AGW is connected to the MME in the core network #1 through an S1-MME interface. The AGW is further connected to an access management network element #2 in a core network #2. For example, if the access management network element #2 is an AMF, the AGW is connected to the AMF in the core network #2 through the N2 interface. If the access management network element #2 is an MME, the AGW is connected to the MME in the core network #2 through the S1-MME interface.

It should be noted that, in the communication system shown in (b) in FIG. 3, the AGW may be further connected to more access management network elements in the dedicated core network. For example, the AGW is further connected to an access management network element #3 in a core network #3, and the core network #3 is a dedicated core network.

Optionally, as shown in FIG. 3, the AGW is further connected to a policy management network element #1 and/or a data management network element #1 in the core network #1.

Optionally, as shown in FIG. 3, the AGW is further connected to a policy management network element #2 and/or a data management network element #2 in the core network #2.

The general-purpose terminal device in FIG. 3 represents a terminal device that supports access only to the public core network, that is, represents a terminal device that supports access only to the core network #1. The dedicated terminal device represents a terminal device that supports access to the dedicated core network, that is, represents a terminal device that supports access to the core network #2. Optionally, the dedicated terminal device may also support access to the public core network, that is, may also support access to the core network #1.

It should be noted that a name of the network element shown in FIG. 3 is merely used as an example. The network element shown in FIG. 3 may alternatively be referred to as another name, or may be replaced with another entity or device having a same function. This is not limited in embodiments of this application.

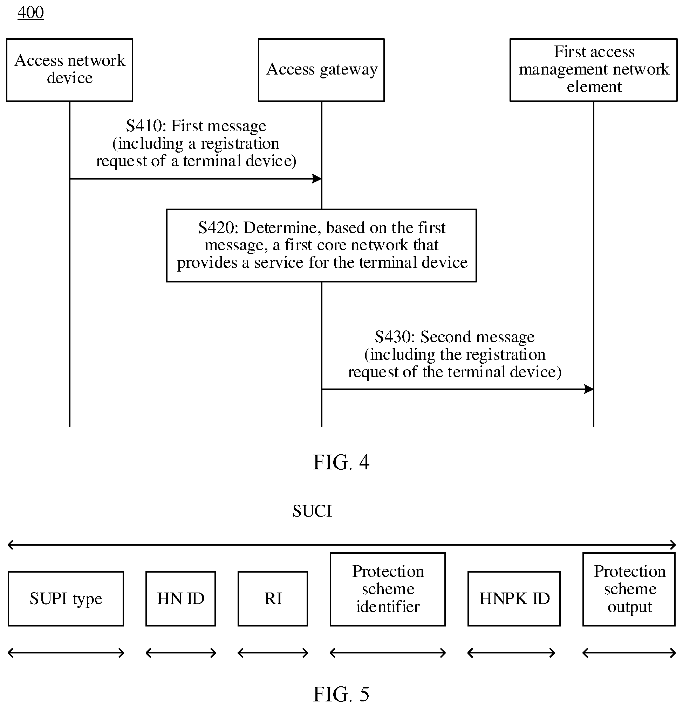

Based on the communication system shown in FIG. 3, the following describes, with reference to FIG. 4 to FIG. 10, the network access method provided in this embodiment of this application.

It should be understood that, enabling the UE to access a correct core network in the following may be enabling the UE to access a suitable core network, and is not limited to enabling a public network subscriber to access a public core network and enabling a dedicated network subscriber to access a dedicated core network. For example, if a dedicated network subscriber is not registered with a public network, the dedicated network subscriber can access only a dedicated core network. In this case, the dedicated core network is a correct core network. If a public network subscriber is not registered with a dedicated network, the public network subscriber can access only a public core network. In this case, the public core network is a correct core network. If a dedicated network subscriber is also registered with a public network, the dedicated network subscriber can access both a public core network and a dedicated core network. In this case, which core network the dedicated network subscriber is suitable for accessing needs to be comprehensively considered with reference to some other factors. For example, when the dedicated network subscriber requests to access a network outside a dedicated network area range, a suitable network is the public core network instead of the dedicated core network. The following provides some detailed examples of access decision-making.

The following uses network elements in a 5G system as an example to describe details of a solution. It may be understood that, when this solution is applied to an LTE system or a future communication system, each network element in the solution may be replaced with another network element having a corresponding function. This is not limited in this application.

In addition, in embodiments of this application, a registration procedure of UE in a core network is usually also referred to as a subscriber registration procedure. For example, a general subscriber registration procedure may be briefly described as follows: The UE sends a registration request to an AMF over an AN. The AMF obtains subscription data from a specific UDM based on a subscriber identifier. After receiving the request, the UDM may obtain actual subscription data from a UDR.

As described above, embodiments of this application further relate to a public network or a dedicated network.

The public network is a communication network constructed by a network service provider (or referred to as an operator) for a public subscriber to use.

The dedicated network is a dedicated network that provides network signal coverage in a specific area and provides communication services for specific subscribers in terms of organization, command, management, production, and dispatching. For example, an enterprise campus is a dedicated network, and may also be referred to as a campus network.

A core network is responsible for providing functions such as access and mobility management, session management, policy control, and subscription management in a public network or a dedicated network deployed by an operator, and corresponds to network elements other than the UE, the AF, and the access network in the 5G system. In addition, the core network may include only some network elements in FIG. 1, all network elements in FIG. 1, or network elements other than those in FIG. 1. This is not limited in this application.

For clarity and brevity of description, a first core network and a second core network are introduced in embodiments of this application. Optionally, one of the first core network and the second core network is a public core network, and the other is a dedicated core network.

FIG. 4 is a schematic flowchart of a network access method according to an embodiment of this application. The method shown in FIG. 4 may be applied to the system architecture shown in (a) in FIG. 3. As shown in FIG. 4, a method 400 may include the following steps.

S410: An access network device sends a first message.

Correspondingly, in S410, an access gateway receives the first message.

For example, the access network device may be a gNB or an eNB.

The first message includes a registration request of a terminal device, and the registration request (registration request) includes an identifier of the terminal device. The identifier of the terminal device may include one or more of the following: a subscription permanent identifier (subscription permanent identifier, SUPI), a subscription concealed identifier (subscription concealed identifier, SUCI), an international mobile subscriber identifier (international mobile subscriber identifier, IMSI), a 5G globally unique temporary identifier (5G globally unique temporary identifier, 5G-GUTI), and a 4G globally unique temporary identifier (4G globally unique temporary identifier, 4G GUTI). In addition, the registration request may further include information such as a last visited tracking area identifier (tracing area identifier, TAI) of the terminal device and a registration type. Optionally, the registration type may include initial registration, mobility registration, periodic registration, or emergency registration.

Optionally, the first message further includes location information of the terminal device. The location information of the terminal device may be information about a tracking area (tracing area, TA) and/or information about a cell on which the terminal device camps.

Optionally, the first message further includes an identifier of a network slice requested by the terminal device. It should be understood that, for a terminal device that supports carrying a network slice identifier in an AN message, the first message may include the identifier of the network slice requested by the terminal device.

Optionally, the first message further includes an identifier allocated by the access network device to the terminal device. For example, in a 5G communication system, the identifier allocated by the access network device to the terminal device may be denoted as a radio access network user equipment next generation application protocol identifier (radio access network user equipment next generation application protocol identifier, RAN UE NGAP ID).

For example, the first message sent by the access network device may be referred to as an N2 message (N2 message).

For example, the first message sent by the access network device may be referred to as an initial UE message (initial UE message). In other words, the first message is a 1^{st} uplink message sent by the access network device after the terminal device initiates a registration procedure. Correspondingly, after receiving the initial UE message, the access gateway performs a subsequent procedure of the method 400. If receiving an uplink non-access stratum transport (uplink non-access stratum transport, UL NAS Transport) message that may be generated subsequently, the access gateway does not perform processing.

The access network device may send the first message based on the received AN message, where the AN message is sent by the terminal device to the access network device. The AN message includes AN parameters (AN parameters) and the registration request. For example, the AN parameters may include information such as the identifier of the terminal device, a globally unique AMF identifier (globally unique AMF identifier, GUAMI), and a selected PLMN ID (selected PLMN ID) of the terminal device. Optionally, the AN message further includes the identifier of the network slice requested by the terminal device.

In a possible implementation, if the access network device can sense an interface between the access network device and the access gateway, or the access network device can sense existence of the access gateway, after receiving the AN message from the terminal device, the access network device sends the first message to the access gateway based on the AN message by default.

It should be noted that, when the access network device can sense the interface between the access network device and the access gateway, in a process in which the access network device communicates with a core network, the access network device sends the first message to the core network via the access gateway. For a message different from the first message, the access network device may send, to the core network via the access gateway, the message different from the first message, or may directly send the message different from the first message to the core network. This is not limited in embodiments of this application.

In another possible implementation, if the access network device cannot sense an interface between the access network device and the access gateway, or the access network device cannot sense existence of the access gateway, after receiving the AN message from the terminal device, the access network device selects an access management network element based on information in the AN message, a message about current camping of the terminal device, and a local operator policy, and sends the first message to the selected access management network element. It should be understood that, based on the system architecture shown in (a) in FIG. 3, the first message sent by the access network device to the selected access management network element is forwarded by the access gateway, that is, the access gateway receives the first message sent by the access network device to the selected access management network element.

It should be noted that, when the access network device can sense the interface between the access network device and the access gateway, in the process in which the access network device communicates with the core network, the access network device sends a message to the core network via the access gateway. In other words, the access network device not only sends the first message to the core network via the access gateway, but also sends a message different from the first message to the core network via the access gateway.

S420: The access gateway determines, based on the first message, a first core network that provides a service for the terminal device.

The first core network is a public core network, or the first core network is a dedicated core network. For example, if the terminal device is a dedicated network terminal device, and the terminal device requests to access the dedicated core network, the first core network that provides the service for the terminal device is the dedicated core network. For another example, if the terminal device is a dedicated network terminal device, and the terminal device requests to access the public core network, the first core network that provides the service for the terminal device is the public core network. For still another example, if the terminal device is the public core network terminal device, the first core network that provides the service for the terminal device is the public core network.

There may be a plurality of implementations in which the access gateway determines, based on the first message, the first core network that provides the service for the terminal device. The following provides some possible examples.

In a possible implementation, the access gateway determines, based on information carried in the first message, the first core network that provides the service for the terminal device.

Example 1: When the first core network is the dedicated core network, if determining, based on the identifier of the terminal device, that the identifier of the terminal device is allocated by a second access management network element to the terminal device, the access gateway determines that the first core network provides the service for the terminal device. The second access management network element belongs to the first core network.

As described above, the identifier of the terminal device may include the 5G-GUTI. The 5G-GUTI includes the GUAMI and a 5G temporary mobile subscriber identifier (5G temporary mobile subscriber identifier, 5G-TMSI). The GUAMI identifies an AMF that allocates the 5G-GUTI to the terminal device. The 5G-TMSI uniquely identifies the terminal device in the AMF. If determining, based on the GUAMI in the 5G-GUTI, that the AMF identified by the GUAMI belongs to the first core network, the access gateway determines that the first core network provides the service for the terminal device. The AMF identified by the GUAMI is an example of the second access management network element.

Alternatively, the identifier of the terminal device may include the 4G GUTI. The 4G GUTI includes a globally unique MME identifier (globally unique MME identifier, GUMMEI) and an MME-temporary mobile subscriber identifier (MME-temporary mobile subscriber identifier, M-TMSI). The GUMMEI identifies an MME that allocates the 4G GUTI to the terminal device. The M-TMSI uniquely identifies the terminal device in the MME. If determining, based on the GUMMEI in the 4G GUTI, that the MME identified by the GUMMEI belongs to the first core network, the access gateway determines that the first core network provides the service for the terminal device. The MME identified by the GUMMEI is an example of the second access management network element.

It may be understood that, because only the dedicated network terminal device can access the dedicated core network, when the first core network is the dedicated core network, if determining, based on the identifier of the terminal device, that the identifier of the terminal device is allocated by the second access management network element to the terminal device, the access gateway may determine that the terminal device is the dedicated network terminal device, so that the access gateway may determine that the first core network provides the service for the terminal device.

It may be further understood that, because both the dedicated network terminal device and a general-purpose terminal device can access the public core network, when the first core network is the public core network, even if the access gateway may determine, based on the identifier of the terminal device, that the identifier of the terminal device is allocated by the second access management network element to the terminal device, the access gateway cannot determine that the terminal device is the general-purpose terminal device, and cannot determine whether the first core network provides the service for the terminal device.

Example 2: When determining, based on the identifier of the terminal device, that the first core network stores subscription data of the terminal device, the access gateway determines that the first core network provides the service for the terminal device.

For example, when the identifier of the terminal device includes one or more of the SUPI, the SUCI, or the IMSI, the access gateway may query, from a first policy management network element based on the identifier of the terminal device, whether the terminal device has subscribed to the first core network. In other words, the access gateway may send a request message #1 (an example of a first request message) to the first policy management network element, where the request message #1 includes the identifier of the terminal device, and the request message #1 is used to query whether the terminal device has subscribed to the first core network. Further, if the access gateway receives the subscription data of the terminal device from the first policy management network element, or the access gateway receives a response message from the first policy management network element, where the response message indicates that the terminal device has subscribed to the first core network, the access gateway determines that the first core network stores the subscription data of the terminal device, and further determines that the first core network provides the service for the terminal device. The first policy control network element belongs to the first core network. For example, the first policy control network element is an AM PCF.

Alternatively, when the identifier of the terminal device includes one or more of the SUPI, the SUCI, or the IMSI, the access gateway may query, from a first data management network element based on the identifier of the terminal device, whether the terminal device has subscribed to the first core network. In other words, the access gateway may send a request message #2 (an example of a first request message) to the first data management network element, where the request message #2 includes the identifier of the terminal device, and the request message #2 is used to query whether the terminal device has subscribed to the first core network. Further, if the access gateway receives the subscription data of the terminal device from the first data management network element, or the access gateway receives a response message from the first data management network element, where the response message indicates that the terminal device has subscribed to the first core network, the access gateway determines that the first core network stores the subscription data of the terminal device, and further determines that the first core network provides the service for the terminal device. The first data management network element belongs to the first core network. For example, the first data management network element is a UDM.

Example 3: The access gateway determines, based on the identifier of the terminal device, that the first core network stores subscription data of the terminal device, where the subscription data includes type information of the terminal device, and the type information indicates that the terminal device is of a public network subscriber type or a dedicated network subscriber type. The access gateway may learn of the type information of the terminal device based on the subscription data of the terminal device. Further, when determining, based on the type information, that the terminal device belongs to a subscriber type of the first core network, the access gateway determines that the first core network provides the service for the terminal device.

For example, when the identifier of the terminal device includes one or more of the SUPI, the SUCI, or the IMSI, the access gateway may request, based on the identifier of the terminal device, to obtain the type information of the terminal device from a first policy management network element. In other words, the access gateway may send a request message #3 (an example of a second request message) to the first policy management network element, where the request message #3 includes the identifier of the terminal device, and the request message #3 is used to request the type information of the terminal device. Further, if receiving the type information of the terminal device from the first policy management network element, the access gateway may determine, based on the type information, that the terminal device belongs to the subscriber type of the first core network, and further determine that the first core network provides the service for the terminal device.

Similarly, the access gateway may alternatively request, based on the identifier of the terminal device, to obtain the type information of the terminal device from a first data management network element.

It should be understood that, if the first core network is the public core network, the "subscriber type of the first core network" is the public network subscriber type, and that the terminal device belongs to the subscriber type of the first core network means that the terminal device is a public network subscriber, or that the terminal device is a general-purpose terminal device. If the first core network is the dedicated core network, the "subscriber type of the first core network" is the dedicated network subscriber type, and that the terminal device belongs to the subscriber type of the first core network means that the terminal device is a dedicated network subscriber, or that the terminal device is a dedicated terminal device.

For example, the first core network is the public core network, and the access gateway determines, based on the identifier of the terminal device, that the first core network stores the subscription data of the terminal device. If the type information included in the subscription data indicates that the terminal device is of the public network subscriber type, the access gateway determines that the first core network provides the service for the terminal device.

Example 4: When determining, based on the identifier of the terminal device, that a second core network stores no subscription data of the terminal device, the access gateway determines that the first core network provides the service for the terminal device. The first core network is the public core network, and the second core network is the dedicated core network. Alternatively, the first core network is the dedicated core network, and the second core network is the public core network.

For example, when the identifier of the terminal device includes one or more of the SUPI, the SUCI, or the IMSI, the access gateway may query, from a second policy management network element based on the identifier of the terminal device, whether the terminal device has subscribed to the second core network. In other words, the access gateway may send a request message #4 to the first policy management network element, where the request message #4 includes the identifier of the terminal device, and the request message #4 is used to query whether the terminal device has subscribed to the second core network. Further, if the access gateway receives no subscription data of the terminal device from the second policy management network element, or the access gateway receives a response message from the second policy management network element, where the response message indicates that the terminal device has not subscribed to the second core network, the access gateway determines that the second core network stores no subscription data of the terminal device, and further determines that the first core network provides the service for the terminal device. The second policy control network element belongs to the second core network. For example, the second policy control network element is an AM PCF.

Alternatively, when the identifier of the terminal device includes one or more of the SUPI, the SUCI, or the IMSI, the access gateway may query, from a second data management network element based on the identifier of the terminal device, whether the terminal device has subscribed to the second core network. In other words, the access gateway may send a request message #5 to the second data management network element, where the request message #5 includes the identifier of the terminal device, and the request message #5 is used to query whether the terminal device has subscribed to the second core network. Further, if the access gateway receives no subscription data of the terminal device from the second data management network element, or the access gateway receives a response message from the second data management network element, where the response message indicates that the terminal device has not subscribed to the second core network, the access gateway determines that the second core network stores no subscription data of the terminal device, and further determines that the first core network provides the service for the terminal device. The second data management network element belongs to the second core network. For example, the second data management network element is a UDM.

In another possible implementation, the access gateway determines, based on information carried in the first message and information locally configured by the access gateway, the first core network that provides the service for the terminal device.

Example a: The first message further includes the location information of the terminal device, and the access gateway is configured with one or more of a TAI list of the first core network and a new radio cell global identifier (NR cell global identifier, NCGI) list of the first core network. When determining, based on the identifier of the terminal device, that the first core network stores subscription data of the terminal device, and the TA in the location information of the terminal device is included in the TAI list of the first core network, or the cell in the location information of the terminal device is included in the NCGI list of the second core network, the access gateway determines that the first core network provides the service for the terminal device.

In Example a, for a manner in which the access gateway determines that the first core network stores the subscription data of the terminal device, refer to the description in Example 2.

Optionally, in Example a, if the access gateway learns of type information of the terminal device from the subscription data, when determining that the terminal device belongs to a subscriber type of the first core network, and the TA in the location information of the terminal device is included in the TAI list of the first core network, or the cell in the location information of the terminal device is included in the NCGI list of the second core network, the access gateway determines that the first core network provides the service for the terminal device.

Example b: The first message further includes the identifier of the network slice requested by the terminal device, and the access gateway is configured with the list of identifiers of network slices supported by the first core network. When determining, based on the identifier of the terminal device, that the first core network stores subscription data of the terminal device, and that the identifier of the network slice requested by the terminal device is included in the list of identifiers of network slices supported by the first core network, the access gateway determines that the first core network provides the service for the terminal device.

In Example b, for a manner in which the access gateway determines that the first core network stores the subscription data of the terminal device, refer to the description in Example 2.

Optionally, in Example b, if the access gateway learns of type information of the terminal device from the subscription data, when determining that the terminal device belongs to a subscriber type of the first core network, and that the identifier of the network slice requested by the terminal device is included in the list of identifiers of network slices supported by the second core network, the access gateway determines that the first core network provides the service for the terminal device.

Example c: The access gateway is configured with a subscriber list of the first core network. When determining, based on the identifier of the terminal device and the subscriber list of the first core network, that the terminal device is a subscriber of the first core network, the access gateway determines that the first core network provides the service for the terminal device.

For example, the subscriber list of the first core network may be a number segment of the subscriber of the first core network. The number segment of the subscriber may be one or more of the following: an SUPI number segment, an IMSI number segment, a routing indicator (routing indicator, RI) number segment in an SUCI, or a home network public key identifier (home network public key identifier, HNPK ID) number segment in an SUCI.

FIG. 5 is a diagram of a structure of the SUCI. As shown in FIG. 4, the SUCI includes the following fields: an SUPI type (SUPI type), whose value ranges from 0 to 7, indicating the SUPI type; a home network identifier (home network identifier, HN ID), identifying a home network of a terminal device, where a format depends on the SUPI type, and when the SUPI is an IMSI, the HN ID includes a mobile country code (mobile country code, MCC) and a mobile network code (mobile network code, MNC); an RI, allocated by a home operator, whose length is a decimal number of 1 to 4 digits, and whose value ranges from 0000 to 9999; a protection scheme output (protection scheme identifier), whose value ranges from 0 to 15; an HNPK ID, whose value ranges from 0 to 255; and a protection scheme output (scheme output), where a format depends on a protection scheme.

For example, if the identifier of the terminal device includes the SUPI, and the subscriber list of the first core network includes the SUPI number segment, when the SUPI of the terminal device is included in the SUPI number segment of the first core network, the access gateway determines that the first core network provides the service for the terminal device.

For another example, if the identifier of the terminal device includes the SUCI, and the subscriber list of the first core network includes the RI number segment and the HNPK ID number segment, when the RI in the SUCI of the terminal device is included in the RI number segment of the first core network, the access gateway determines that the first core network provides the service for the terminal device, or when the RI in the SUCI of the terminal device is included in the RI number segment of the first core network, and the HNPK ID in the SUCI of the terminal device is included in the HNPK ID number segment of the first core network, the access gateway determines that the first core network provides the service for the terminal device.

Optionally, in Example c, when determining, based on the identifier of the terminal device, that the first core network stores subscription data of the terminal device, and determining, based on the identifier of the terminal device and the subscriber list of the first core network, that the terminal device is the subscriber of the first core network, the access gateway determines that the first core network provides the service for the terminal device.

It should be understood that the access gateway may alternatively combine a plurality of manners in Example a to Example c, to determine that the first core network provides the service for the terminal device.

For example, if the first message further includes the location information of the terminal device, and the access gateway is configured with the TAI list of the first core network and the subscriber list of the first core network, when determining, based on the identifier of the terminal device, that the first core network stores the subscription data of the terminal device and the TA in the location information of the terminal device is included in the TAI list of the first core network, and determining, based on the identifier of the terminal device and the subscriber list of the first core network, that the terminal device is the subscriber of the first core network, the access gateway determines that the first core network provides the service for the terminal device.

For another example, if the first message further includes the location information of the terminal device and the identifier of the network slice requested by the terminal device, and the access gateway is configured with the TAI list of the first core network and the list of identifiers of network slices supported by the first core network, when determining, based on the identifier of the terminal device, that the first core network stores the subscription data of the terminal device, the TAin the location information of the terminal device is included in the TAI list of the first core network, and the identifier of the network slice requested by the terminal device is included in the list of identifiers of network slices supported by the first core network, the access gateway determines that the first core network provides the service for the terminal device.

S430: The access gateway sends a second message to the first access management network element.

Correspondingly, in S430, the first access management network element receives the second message from the access gateway.

The first access management network element belongs to the first core network, and the first access management network element is the same as the second access management network element described above, or the first access management network element is different from the second access management network element described above. For example, the first access management network element is an AMF or an MME.

The second message includes the registration request of the terminal device.

Optionally, if the first message includes the location information of the terminal device, the second message further includes the location information of the terminal device.

Optionally, if the first message includes the identifier of the network slice requested by the terminal device, the second message further includes the identifier of the network slice requested by the terminal device.

Optionally, if the first message includes the identifier allocated by the access network device to the terminal device, the second message further includes the identifier allocated by the access network device to the terminal device.

After receiving the second message, the first access management network element executes the registration procedure for the terminal device based on the second message, so that the terminal device accesses the first core network.

For example, the second message sent by the access gateway to the first access management network element may be referred to as an initial UE message, that is, when receiving the initial UE message sent by the access network device and determining that the first core network provides the service for the terminal device, the access gateway forwards the received initial UE message to the first access management network element.

In this embodiment of this application, when there is a communication interface between the access network device and the access gateway, the access gateway may receive the first message from the access network device, and then the access network device may select a correct network (namely, the first core network) for the terminal device based on the first message, and route the registration request of the terminal device to the first access management network element included in the first core network. In this way, the terminal device can access the first core network.

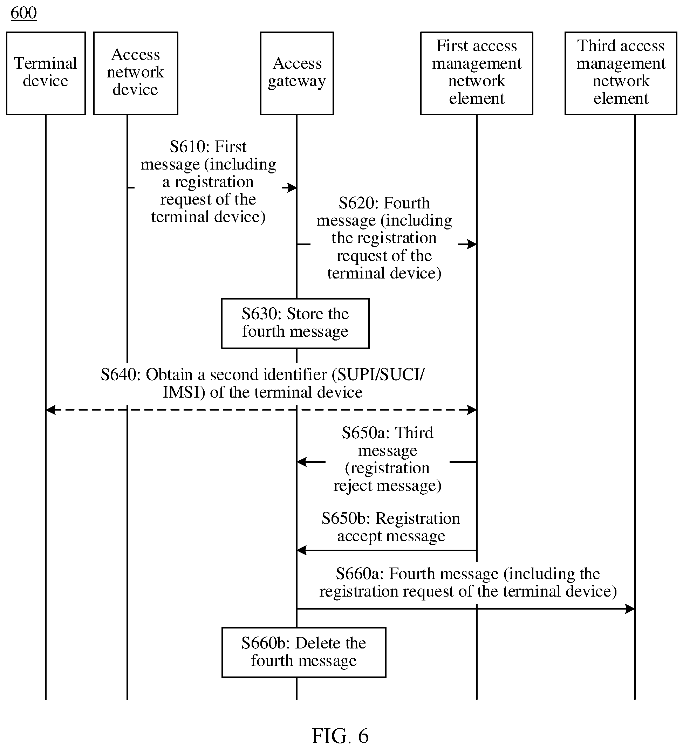

FIG. 6 is a schematic flowchart of a network access method according to an embodiment of this application. The method shown in FIG. 6 may be applied to the system architecture shown in (a) in FIG. 3. As shown in FIG. 6, a method 600 may include the following steps.

S610: An access network device sends a first message.

Correspondingly, in S610, an access gateway receives the first message.

The first message includes a registration request of a terminal device, and the registration request includes a first identifier of the terminal device. The first identifier of the terminal device may include one or more of the following: an SUPI, an SUCI, an IMSI, a 5G-GUTI, or a 4G GUTI. In addition, the registration request may further include information such as a last visited TAI of the terminal device and a registration type.

Optionally, the first message further includes location information of the terminal device. The location information of the terminal device may be information about a TA and/or information about a cell on which the terminal device camps.

Optionally, the first message further includes an identifier of a network slice requested by the terminal device.

It should be understood that, for a terminal device that supports carrying a network slice identifier in an AN message, the first message may include the identifier of the network slice requested by the terminal device.

Optionally, the first message further includes an identifier allocated by the access network device to the terminal device. For example, in a 5G communication system, the identifier allocated by the access network device to the terminal device may be denoted as a RAN UE NGAP ID.

For more descriptions of S610, refer to S410 in the foregoing method 400. For brevity, details are not described herein again.

S620: The access gateway sends a fourth message to a first access management network element.

Correspondingly, the first access management network element receives the fourth message from the access gateway.

The first access management network element belongs to a first core network, and the first core network is a public core network, or the first core network is a dedicated core network. For example, the first access management network element is an AMF or an MME.

The fourth message includes the registration request of the terminal device.

Optionally, if the first message includes the location information of the terminal device, the fourth message further includes the location information of the terminal device.

Optionally, if the first message includes the identifier of the network slice requested by the terminal device, the fourth message further includes the identifier of the network slice requested by the terminal device.

Optionally, if the first message includes the identifier allocated by the access network device to the terminal device, the fourth message further includes the identifier allocated by the access network device to the terminal device.

For example, a second message sent by the access gateway to the first access management network element may be referred to as an initial UE message, that is, when receiving the initial UE message sent by the access network device and determining that the first core network provides a service for the terminal device, the access gateway forwards the received initial UE message to the first access management network element.

In a possible implementation, when receiving the first message, the access gateway sends the fourth message to the first access management network element based on the first message by default.

In another possible implementation, after the access gateway receives the first message from the access network device, if the access gateway cannot determine, based on the first message, a core network that provides a service for the terminal device, the access gateway sends the fourth message to the first access management network element based on the first message by default.

As described in S610, the first identifier of the terminal device may include the 5G-GUTI. Both a general-purpose terminal device and a dedicated terminal device can access the public core network. Therefore, if determining, based on a GUAMI in the 5G-GUTI, that the 5G-GUTI is allocated by an AMF in the public core network to the terminal device, the access gateway cannot determine whether the terminal device is the general-purpose terminal device, and further the access gateway cannot determine whether the core network that provides the service the terminal device is the public core network.

Alternatively, the first identifier of the terminal device may include the 4G GUTI. Both a general-purpose terminal device and a dedicated terminal device can access the public core network. Therefore, if determining, based on a GUMMEI in the 4G GUTI, that the 4G GUTI is allocated by an MME in the public core network to the terminal device, the access gateway cannot determine whether the terminal device is the general-purpose terminal device, and further the access gateway cannot determine whether a network that provides the service the terminal device is the public core network.

S630: The access gateway buffers the fourth message.

It should be noted that, in FIG. 6, an example in which S630 is performed after S620 is used for description. An execution sequence of S620 and S630 is not limited in this embodiment of this application, and S630 may alternatively be performed before S620.

Optionally, if the first identifier of the terminal device does not include the SUPI, the SUCI, and the IMSI, the method 600 further includes S640.

S640: The first access management network element obtains a second identifier of the terminal device.

The second identifier of the terminal device includes the SUCI or the SUPI, or the second identifier of the terminal device includes the IMSI.

For example, the first access management network element sends an identity request (identity request) message to the terminal device, and the terminal device sends an identity response (identity response) message to the first access management network element based on the received identity request message, where the identity response message includes the second identifier of the terminal device.

Further, if the first access management network element determines that the terminal device is not a subscriber of the first core network, S650a and S660a in the method 600 are performed; or if the first access management network element determines that the terminal device is a subscriber of the first core network, S650b and S660b in the method 600 are performed.

The following describes manners in which the first access management network element determines whether the terminal device is the subscriber of the first core network.

Implementation 1: When determining that the first core network stores subscription data of the terminal device, the first access management network element determines that the terminal device is the subscriber of the first core network. If determining that the first core network stores no subscription data of the terminal device, the first access management network element determines that the terminal device is not the subscriber of the first core network.

For example, when the first identifier of the terminal device includes at least one of the SUPI, the SUCI, or the IMSI, or when the first access management network element obtains the second identifier of the terminal device, the first access management network element may query, from a first policy control network element or a first data management network element, whether the terminal device has subscribed to the first core network. Further, if the first access management network element receives the subscription data of the terminal device from the first policy management network element or the first data management network element, or receives a response message from the first policy management network element or the first data management network element, where the response message indicates that the terminal device has subscribed to the first core network, the first access management network element determines that the first core network stores the subscription data of the terminal device; or otherwise, the first access management network element determines that the first core network stores no subscription data of the terminal device.

Implementation 2: The first access management network element determines that the first core network stores subscription data of the terminal device, where the subscription data includes type information, and the type information indicates that the terminal device is of a public network subscriber type or a dedicated network subscriber type. When determining, based on the type information, that the terminal device belongs to a subscriber type of the first core network, the first access management network element determines that the terminal device is the subscriber of the first core network. When determining, based on the type information, that the terminal device does not belong to a subscriber type of the first core network, the first access management network element determines that the terminal device is not the subscriber of the first core network.

For more descriptions of Implementation 2, refer to Example 3 in the method 400.

Implementation 3: If the fourth message further includes the location information of the terminal device, when determining that the first core network stores subscription data of the terminal device, and determining, based on the location information of the terminal device, that the terminal device is located in a service area of the first core network, the first access management network element determines that the terminal device is the subscriber of the first core network. If determining, based on the location information of the terminal device, that the terminal device is located outside a service area of the first core network, the first access management network element determines that the terminal device is not the subscriber of the first core network.

Implementation 4: If the fourth message further includes the identifier of the network slice requested by the terminal device, when determining that the first core network stores subscription data of the terminal device, and determining, based on the identifier of the network slice requested by the terminal device, that the first core network supports the network slice requested by the terminal device, the first access management network element determines that the terminal device is the subscriber of the first core network. If determining, based on the identifier of the network slice requested by the terminal device, that the first core network does not support the network slice requested by the terminal device, the first access management network element determines that the terminal device is not the subscriber of the first core network.

S650a: The first access management network element sends a third message to the access gateway.

Correspondingly, in S650a, the access gateway receives the third message from the first access management network element.

The third message may also be referred to as a registration reject message. The third message includes a third identifier of the terminal device, and the third identifier of the terminal device may include one or more of the following: the SUPI, the SUCI, the IMSI, the 5G-GUTI, or the 4G GUTI. If the fourth message includes the identifier allocated by the access network device to the terminal device, the third identifier of the terminal device may further include the identifier allocated by the access network device to the terminal device.

Optionally, the third message further includes a reject cause value (cause value). The reject cause value indicates that the terminal device is not the subscriber of the first core network, or the reject cause value indicates that the terminal device is illegal UE (illegal UE). For example, the reject cause value is a cause value #3.

Optionally, when the first access management network element determines that the terminal device is not the subscriber of the first core network, if the first access management network element determines that the terminal device is a subscriber of a second core network, the third message further includes one or more of the following: an identifier of the second core network, an identifier of a network slice of the second core network, and an access management network element set identifier. The access management network element set identifier is used by the access gateway to determine the second core network. The first core network is the public core network, and the second core network is the dedicated core network. Alternatively, the first core network is the dedicated core network, and the second core network is the public core network.

It should be understood that the identifier of the second core network may uniquely identify one second core network, that is, there is a one-to-one mapping relationship between the identifier of the second core network and the second core network.

The identifier of the network slice of the second core network may identify a second core network that provides a network slice. There may be one or more second core networks. To be specific, there may be a one-to-one mapping relationship between an identifier of a network slice and a second core network. For example, an identifier of one network slice corresponds to one second core network. Alternatively, there may be a one-to-many mapping relationship. For example, an identifier of one network slice corresponds to a plurality of second core networks. Alternatively, there may be a many-to-many mapping relationship. For example, an identifier of one network slice corresponds to a plurality of second core networks, and different second core networks may provide a same network slice or different network slices.

For example, the first core network is a public network. If the network slice of the second core network indicated by the third message may be provided by a plurality of dedicated networks, it may be considered that the identifier of the network slice indicates that a network that provides a service for the terminal device is a dedicated network. The access gateway may determine a dedicated network from dedicated networks to which the access gateway supports to access and that can support the network slice indicated by the third message, and the determined dedicated network is the second core network. Optionally, if the identifier of the network slice indicated by the third message is provided only by a dedicated network that supports access of the access gateway, the dedicated network that can provide the network slice is the second core network.

The access management network element set identifier is used by the access gateway to determine the second core network. In some examples, that the access management network element set identifier indicated by the third message may be used by the access gateway to determine the second core network may be implemented by using a specific access management network element set identifier, for example, all 1s or a specific value. For example, there may be a one-to-one mapping relationship between the access management network element set identifier configured on the access gateway and the second core network.

For example, the first access management network element may request to obtain an access policy of the terminal device from the first policy control network element or the first data management network element, to obtain one or more of the following from the access policy of the terminal device: the identifier of the second core network, the identifier of the network slice of the second core network, and the access management network element set identifier.

S660a: The access gateway sends the fourth message to a third access management network element.

Correspondingly, in S660a, the third access management network element receives the fourth message from the access gateway.

The third access management network element belongs to the second core network. For example, the third access management network element is an AMF or an MME. The first core network is the public core network, and the second core network is the dedicated core network. Alternatively, the first core network is the dedicated core network, and the second core network is the public core network.

After receiving the third message from the first access management network element, the access gateway indexes, based on the third identifier that is of the terminal device and that is included in the third message, the fourth message stored in the access gateway, and then sends the fourth message to the second access management network element.

The following describes manners in which the access gateway determines the third access management network element.

In a possible implementation, if the first core network is the dedicated core network, after receiving the third message from the first access management network element, the access gateway may determine that the terminal device is a subscriber of the public core network, and then the access gateway determines that the second core network is the public core network, and determines that the third access management network element is an access management network element in the public core network.

In another possible implementation, if the first core network is the public core network, after receiving the third message from the first access management network element, the access gateway may determine that the terminal device is a subscriber of the dedicated core network, and then the access gateway determines that the second core network is the dedicated core network. If the access gateway is connected to only an access management network element of one dedicated core network, the access gateway determines that the third access management network element is an access management network element in the dedicated core network connected to the access gateway.

In still another possible implementation, if the third message includes one or more of the following: the identifier of the second core network, the identifier of the network slice of the second core network, and the access management network element set identifier, the access gateway may determine the second core network based on the third message and determine the third access management network element in the second core network.

For example, if the third message includes the identifier of the second core network, and the access gateway is configured with a first mapping relationship between one or more network identifiers and one or more core networks, the access gateway may determine the second core network based on the first mapping relationship and the third message.

For another example, if the third message includes the identifier of the network slice of the second core network, and the access gateway is configured with a second mapping relationship between identifiers of one or more network slices and one or more core networks, the access gateway may determine the second core network based on the third message and the second mapping relationship.

For still another example, if the third message includes the access management network element set identifier, and the access gateway is configured with a third mapping relationship between one or more access management network element set identifiers and one or more core networks, the access gateway may determine the second core network based on the third message and the third mapping relationship.

In yet another possible implementation, if the first core network is the public core network, after receiving the third message from the first access management network element, the access gateway may determine that the terminal device is a subscriber of the dedicated core network, and then the access gateway determines that the second core network is the dedicated core network. If the access gateway is connected to access management network elements of a plurality of dedicated core networks, the access gateway may determine, based on the third message and locally configured information, the dedicated core network that provides the service for the terminal device.

For example, if the third message includes the location information of the terminal device, and the access gateway is configured with TAI lists and/or NCGI lists of different dedicated core networks, when determining that a TA in the location information of the terminal device is included in a TAI list of a dedicated core network #1, or a cell in the location information of the terminal device is included in an NCGI list of the dedicated core network #1, the access gateway determines that the dedicated core network #1 provides a service for the terminal device, and the access gateway determines that the second core network is the dedicated core network #1, and determines that the third access management network element is an access management network element in the dedicated core network #1.

For another example, if the third message includes the identifier of the network slice requested by the terminal device, and the access gateway is configured with identifier lists of network slices supported by different dedicated core networks, when determining that the identifier of the network slice requested by the terminal device is included in a list of identifiers of network slices supported by a dedicated core network #1, the access gateway determines that the dedicated core network #1 provides a service for the terminal device, determines that the second core network is the dedicated core network #1, and determines that the third access management network element is an access management network element in the dedicated core network #1.

After determining the third access management network element according to one of the foregoing manners, the access gateway sends the fourth message to the third access management network element. Correspondingly, after receiving the fourth message, the third access management network element performs the registration procedure for the terminal device based on the fourth message.

S650b: The first access management network element sends a registration accept (registration accept) message to the access gateway.

Correspondingly, in S650b, the access gateway receives the registration accept message from the first access management network element.

As described above, when determining that the terminal device is the subscriber of the first core network, the first access management network element performs the registration procedure for the terminal device, and sends the registration accept message to the access gateway.

S660b: The access gateway deletes the fourth message.

When receiving the registration accept message from the first access management network element, the access gateway deletes the stored fourth message.

In this embodiment of this application, after receiving the first message from the access network device, the access gateway may send the fourth message to the first access management network element according to a default rule, so that the first access management network element performs the registration procedure for the terminal device. In addition, if the terminal device is not the subscriber of the first core network, the first access management network element may send the third message to the access gateway, so that the access gateway determines, based on the third message, that the second core network provides the service for the terminal device, and resends the fourth message to the third access management network element in the second core network. In this way, the terminal device accesses a correct network.

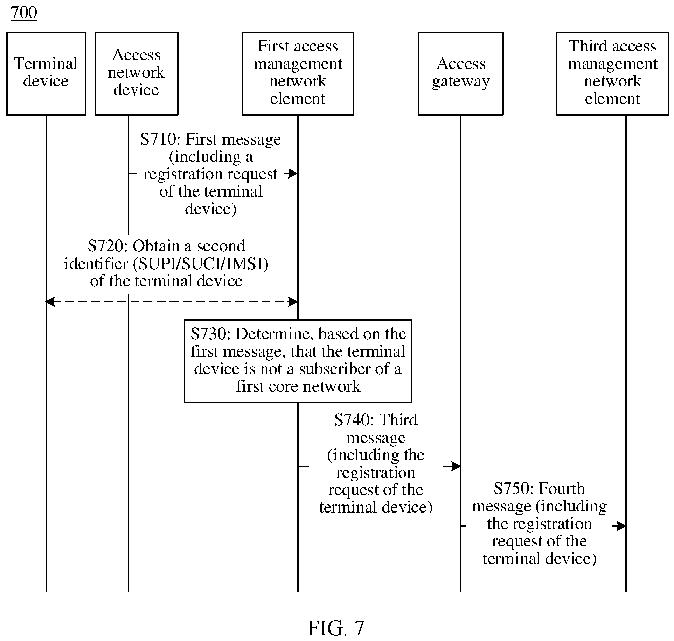

FIG. 7 is a schematic flowchart of a network access method according to an embodiment of this application. The method shown in FIG. 7 may be applied to the system architecture shown in (b) in FIG. 3. As shown in FIG. 7, a method 700 may include the following steps.

S710: An access network device sends a first message to a first access management network element.

Correspondingly, in S710, the first access management network element receives the first message.

The first access management network element belongs to a first core network, and the first core network is a public core network, or the first core network is a dedicated core network. For example, the first access management network element is an AMF or an MME.

It should be understood that after receiving an AN message from a terminal device, the access network device selects an initial access management network element, that is, the first access management network element, based on information in the AN message, a message about current camping of the terminal device, and a local operator policy, and sends the first message to the first access management network element. For descriptions of the AN message, refer to S410 in the foregoing method 400.

The first message includes a registration request of the terminal device, and the registration request includes a first identifier of the terminal device. The first identifier of the terminal device may include one or more of the following: an SUPI, an SUCI, an IMSI, a 5G-GUTI, or a 4G GUTI. In addition, the registration request may further include information such as a last visited TAI of the terminal device and a registration type.

Optionally, the first message further includes location information of the terminal device. The location information of the terminal device may be information about a TA and/or information about a cell on which the terminal device camps.

Optionally, the first message further includes an identifier of a network slice requested by the terminal device.

It should be understood that, for a terminal device that supports carrying a network slice identifier in the AN message, the first message may include the identifier of the network slice requested by the terminal device.

Optionally, the first message further includes an identifier allocated by the access network device to the terminal device. For example, in a 5G communication system, the identifier allocated by the access network device to the terminal device may be denoted as a RAN UE NGAP ID.

For example, the first message sent by the access network device may be referred to as an initial UE message. In other words, the first message is a 1^{st} uplink message sent by the access network device after the terminal device initiates a registration procedure.

Optionally, if the first identifier of the terminal device does not include the SUPI, the SUCI, and the IMSI, the method 700 further includes S720.

S720: The first access management network element obtains a second identifier of the terminal device.

The second identifier of the terminal device includes the SUCI or the SUPI, or the second identifier of the terminal device includes the IMSI.

For example, the first access management network element sends an identity request message to the terminal device, and the terminal device sends an identity response message to the first access management network element based on the received identity request message, where the identity response message includes the second identifier of the terminal device.

S730: The first access management network element determines, based on the first message, that the terminal device is not a subscriber of the first core network.

For a manner in which the first access management network element determines, based on the first message, that the terminal device is not the subscriber of the first core network, refer to the manner in which the first access management network element determines, based on the fourth message, that the terminal device is not the subscriber of the first core network described in the foregoing method 600. For brevity, details are not described herein again.

When the first access management network element determines that the terminal device is not the subscriber of the first core network, S740 in the method 700 continues to be performed. If the first access management network element determines that the terminal device is the subscriber of the first core network, the first access management network element performs the registration procedure for the terminal device.

S740: The first access management network element sends a third message to an access gateway.

Correspondingly, the access gateway receives the third message from the first access management network element.

The third message includes the registration request of the terminal device.

Optionally, if the first message includes the location information of the terminal device, the third message further includes the location information of the terminal device.

Optionally, if the first message includes the identifier of the network slice requested by the terminal device, the third message further includes the identifier of the network slice requested by the terminal device.

Optionally, if the first message includes the identifier allocated by the access network device to the terminal device, the third message further includes the identifier allocated by the access network device to the terminal device.

Optionally, the third message further includes the second identifier of the terminal device.

Optionally, the third message further includes a mobility management context (mobility management context, MM context) of the terminal device.

Optionally, when the first access management network element determines that the terminal device is not the subscriber of the first core network, if the first access management network element determines that the terminal device is a subscriber of a second core network, the third message further includes one or more of the following: an identifier of the second core network, an identifier of a network slice of the second core network, and an access management network element set identifier. The access management network element set identifier is used by the access gateway to determine the second core network. The first core network is the public core network, and the second core network is the dedicated core network. Alternatively, the first core network is the dedicated core network, and the second core network is the public core network.

S750: The access gateway sends a fourth message to a third access management network element.

Correspondingly, in S750, the third access management network element receives the fourth message from the access gateway.

After receiving the third message from the first access management network element, the access gateway determines, based on the third message, the second core network that provides a service for the terminal device, determines the third access management network element in the core network, and sends the fourth message to the third access management network element. Correspondingly, after receiving the fourth message, the third access management network element performs the registration procedure for the terminal device based on the fourth message.

For a manner in which the access gateway determines the second core network and the third access management network element based on the third message, refer to S660a in the foregoing method 600. For brevity, details are not described herein again.

The following describes a manner in which the second core network to which the third access management network element belongs provides the service for the terminal device after the third access management network element performs the registration procedure for the terminal device based on the fourth message.

In a possible implementation, the third access management network element determines, based on the fourth message, the access network device accessed by the terminal device, so that the third access management network element may establish a connection to the access network device accessed by the terminal device. After the third access management network element establishes the connection to the access network device accessed by the terminal device, the second core network may provide the service for the terminal device via the access network device accessed by the terminal device. For example, in a process in which the terminal device requests to establish a session, the terminal device may send a session request to the third access management network element via the accessed access network device. In this way, the second core network can establish the session for the terminal device based on the session request.

In another possible implementation, if the third access management network element cannot establish a connection to the access network device accessed by the terminal device, the second core network may provide the service for the terminal device via the access gateway and the first access management network element. In other words, the access gateway and the first access management network element serve as routing nodes between the access network device accessed by the terminal device and the second core network, to forward signaling or data transmitted between the terminal device and the second core network. For example, in a process in which the terminal device requests to establish a session, the terminal device may send a session request to the first access management network element via the accessed access network device. Because the first access management network element cannot provide a service for the terminal device, the first access management network element forwards the session request to the access gateway, and the access gateway further forwards the session request to the third access management network element. In this way, the second core network can establish the session for the terminal device based on the session request. For another example, after the second core network establishes a session for the terminal device, the terminal device may send uplink data to the first access management network element via the accessed access network device. Because the first access management network element cannot provide a service for the terminal device, the first access management network element forwards the uplink data to the access gateway, and the access gateway further forwards the session request to the third access management network element.

It should be understood that when the second core network provides the service for the terminal device via the access gateway, the access gateway further has one or more of the following functions: allocating a temporary identifier to the terminal device; maintaining a context link between the third access management network element and the first access management network element; forwarding signaling including paging signaling and QoS assurance signaling; or forwarding user plane data. When the second core network provides the service for the terminal device via the access gateway, an initial access management network element (namely, the first access management network element) selected by the access network device accessed by the terminal device for the terminal device further has one or more of the following functions: supporting a default redirection capability, and a forwarding rule between the access network device accessed by the terminal device and the access gateway; and supporting signaling and/or user plane data forwarding.

It should be further understood that when the second core network provides the service for the terminal device via the access gateway, the first access management network element and the second access management network element share a same access network device, or the first access management network element and the second access management network element are connected to different access network devices. This is not limited in embodiments of this application.

In this embodiment of this application, if the initial access management network element (namely, the first access management network element) selected by the access network device cannot perform the registration procedure for the terminal device, the first access management network element sends the third message to the access gateway, so that the access gateway determines, based on the third message, that the second core network provides the service for the terminal device, and resends the fourth message to the third access management network element in the second core network. In this way, the terminal device accesses a correct network.

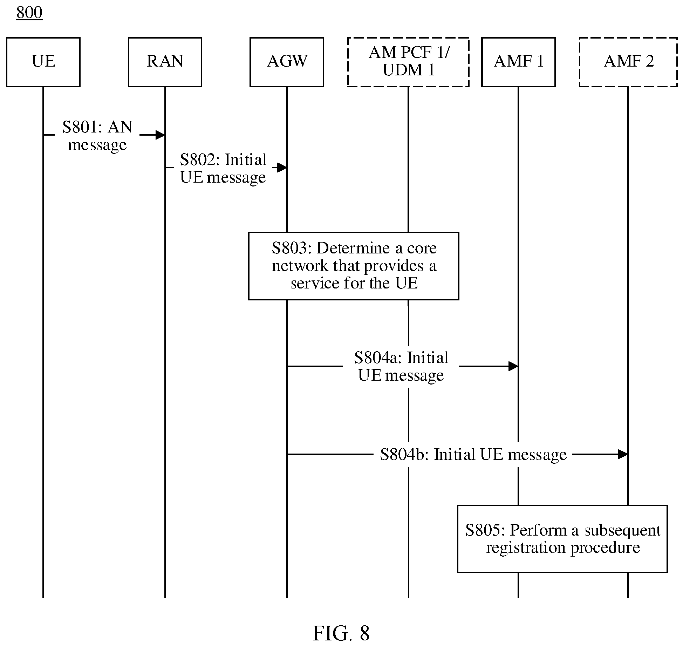

The following describes the methods provided in embodiments of this application with reference to FIG. 8 to FIG. 10. In methods shown in FIG. 8 to FIG. 10, an AMF 1, an AM PCF 1, and a UDM 1 belong to a dedicated core network, and an AMF 2 belongs to a public core network.

With reference to FIG. 4, FIG. 8 is a schematic flowchart of applying a method according to an embodiment of this application to a 5G communication system. As shown in FIG. 8, a method 800 includes the following steps.

S801: UE sends an AN message to a RAN.

Correspondingly, in S801, the RAN receives the AN message from the UE.

The AN message carries an AN parameter and a registration request, and the registration request is a non-access stratum (non-access stratum, NAS) message. For example, the AN parameter may include an identifier of the UE, for example, information such as a 5G-S-TMSI, a GUAMI, and a selected PLMN ID. The registration request includes an identifier of the UE, for example, an SUCI or a 5G-GUTI. In addition, the registration request may further include information such as a last visited TAI of the UE and a registration type.

S802: The RAN sends an initial UE message.

Correspondingly, in S802, an AGW receives the initial UE message from the RAN.

For more descriptions of S802, refer to S410 in the foregoing method 400.

S803: The AGW determines a core network that provides a service for the UE.

Optionally, in S803, the AGW may determine, together with the AM PCF 1 or the UDM 1, the core network that provides the service for the UE.

For a manner in which the AGW determines the core network that provides the service for the UE, refer to S420 in the foregoing method 400.

Further, if the AGW determines that the core network that provides the service for the UE is a dedicated core network, S804a in the method 800 is performed. If the AGW determines that the core network that provides the service for the UE is a public core network, S804b in the method 800 is performed.

S804a: The AGW sends the initial UE message to the AMF 1.

Correspondingly, in S804a, the AMF 1 receives the initial UE message from the AGW.

For more descriptions of S804a, refer to S430 in the foregoing method 400.

S804b: The AGW sends the initial UE message to the AMF 2.

Correspondingly, in S804b, the AMF 2 receives the initial UE message from the AGW.

For more descriptions of S804b, refer to S430 in the foregoing method 400.

S850: The AMF 1 or the AMF 2 performs a subsequent registration procedure.

If S804a in the method 800 is performed, the AMF 1 receives the initial UE message from the AGW, and then the AMF 1 performs the subsequent registration procedure based on the initial UE message, so that the UE is registered with the dedicated core network.

If S804b in the method 800 is performed, the AMF 2 receives the initial UE message from the AGW, and then the AMF 2 performs the subsequent registration procedure based on the initial UE message, so that the UE is registered with the public core network.

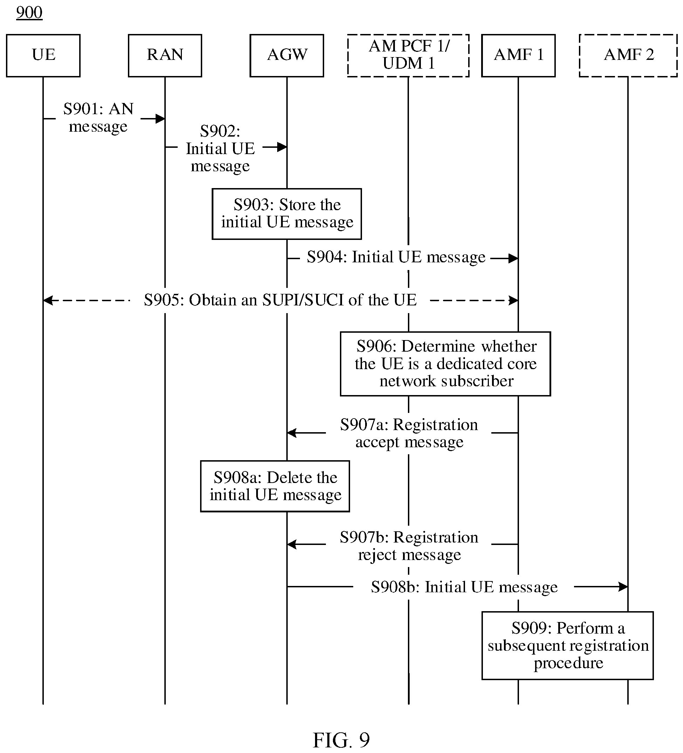

With reference to FIG. 6, FIG. 9 is a schematic flowchart of applying a method according to an embodiment of this application to a 5G communication system. As shown in FIG. 9, a method 900 includes the following steps.

S901: UE sends an AN message to a RAN.

Correspondingly, in S901, the RAN receives the AN message from the UE.

For S901, refer to S801 in the foregoing method 800.

S902: The RAN sends an initial UE message.

Correspondingly, in S902, an AGW receives the initial UE message from the RAN.

The initial UE message includes a RAN UE NGAP ID allocated by the RAN to the UE.

For more descriptions of S902, refer to S410 in the foregoing method 400.

S903: The AGW stores the initial UE message.

Optionally, if the AGW cannot determine, based on the received initial UE message, a core network that provides a service for the UE, the AGW stores the initial UE message.

S904: The AGW sends the initial UE message to the AMF 1.

Correspondingly, in S904, the AMF 1 receives the initial UE message from the AGW.

For more descriptions of S904, refer to S430 in the foregoing method 400.

It should be noted that the method 900 is described by using an example in which the AGW first sends the initial UE message to the AMF 1. In another possible implementation, the AGW may first send the initial UE message to the AMF 2.

Optionally, if the initial UE message does not include an SUPI and an SUCI of the UE, the method 900 further includes S905.

S905: The AMF 1 obtains the SUPI or the SUCI of the UE.

For more descriptions of S905, refer to S640 in the foregoing method 600.

S906: The AMF 1 determines whether the UE is a dedicated core network subscriber.

For a method in which the AMF 1 determines whether the UE is the dedicated core network subscriber, refer to the description in the foregoing method 600.

Further, if the AMF 1 determines that the UE is the dedicated core network subscriber, S907a and S908a in the method 900 are performed. If the AMF 1 determines that the UE is not the dedicated core network subscriber, S907b and S908b in the method 900 are performed.

S907a: The AMF 1 sends a registration accept message to the AGW.

Correspondingly, the AGW receives the registration accept message from the AMF 1.

S908a: The AGW deletes the initial UE message.

After receiving the registration accept message from the AMF 1, the AGW deletes the stored initial UE message.

S907b: The AMF 1 sends a registration reject message to the AGW.

Correspondingly, the AGW receives the registration reject message from the AMF 1.

The registration reject message includes a RAN UE NGAP ID and a reject cause value #3.

S908b: The AGW sends the initial UE message to the AMF 2.

Correspondingly, the AMF 2 receives the initial UE message from the AGW.

After receiving the registration reject message from the AMF 1, the AGW determines, based on the registration reject message, that the UE is not the dedicated core network subscriber, and further determines that the UE is a public core network subscriber. When determining that the UE is the public core network subscriber, the AGW indexes, based on the RAN UE NGAP ID included in the registration reject message, the initial UE message stored in the AGW, and sends the initial UE message to the AMF 2.

S909: The AMF 1 or the AMF 2 performs a subsequent registration procedure.

If S907a and S908a in the method 900 are performed, the AMF 1 performs the subsequent registration procedure based on the initial UE message, so that the UE is registered with the dedicated core network.

If S907b and S908b in the method 900 are performed, the AMF 2 receives the initial UE message from the AGW, and then the AMF 2 performs the subsequent registration procedure based on the initial UE message, so that the UE is registered with a public core network.

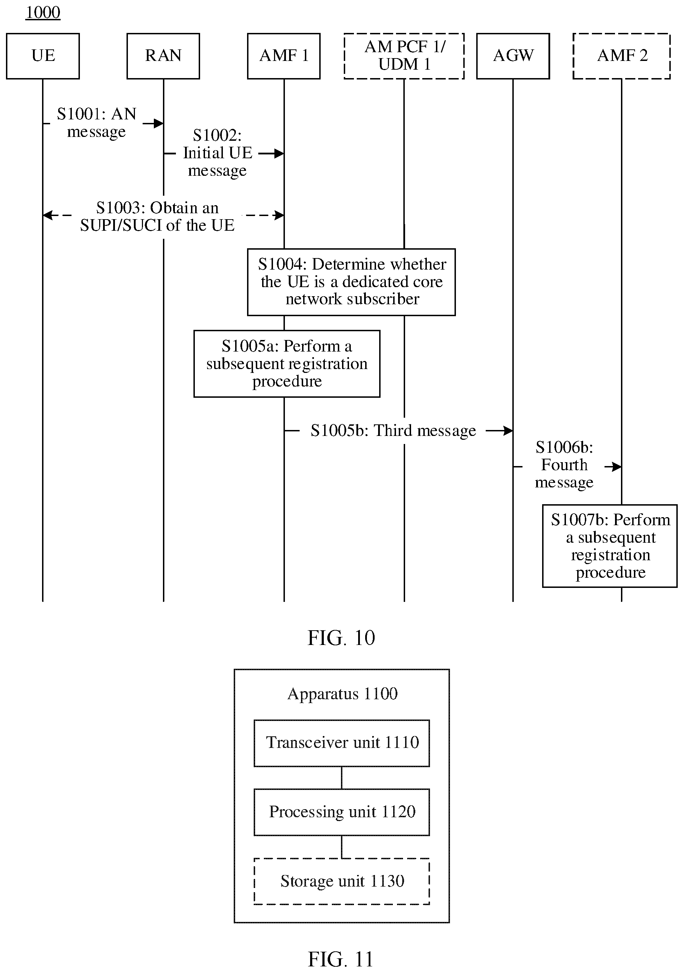

With reference to FIG. 7, FIG. 10 is a schematic flowchart of applying a method according to an embodiment of this application to a 5G communication system. As shown in FIG. 10, a method 1000 includes the following steps.

S1001: UE sends an AN message to a RAN.

Correspondingly, in S1001, the RAN receives the AN message from the UE.

For S1001, refer to S801 in the foregoing method 800.

S1002: The RAN sends an initial UE message to the AMF 1.

Correspondingly, in S1002, the AMF 1 receives the initial UE message from the RAN.

It should be noted that in the method 1000, an example in which an initial AMF selected by the RAN is the AMF 1 is used for description. In an actual implementation process, the initial AMF selected by the RAN may alternatively be the AMF 2.

For more descriptions of S1002, refer to S710 in the foregoing method 700.

Optionally, if the initial UE message does not include an SUPI and an SUCI of the UE, the method 1000 further includes S1003.

S1003: The AMF 1 obtains the SUPI or the SUCI of the UE.

For more descriptions of S1003, refer to S720 in the foregoing method 700.

S1004: The AMF 1 determines whether the UE is a dedicated core network subscriber.

For a method in which the AMF 1 determines whether the UE is the dedicated core network subscriber, refer to the description in the foregoing method 600.

Further, if the AMF 1 determines that the UE is the dedicated core network subscriber, S1005a in the method 1000 is performed. If the AMF 1 determines that the UE is not the dedicated core network subscriber, S1005b to S1007b in the method 1000 are performed.

S1005a: The AMF 1 performs a subsequent registration procedure.

If the AMF 1 determines that the UE is the dedicated core network subscriber, the AMF 1 performs the subsequent registration procedure based on the initial UE message, so that the UE is registered with the dedicated core network.

S1005b: The AMF 1 sends a third message to an AGW.

Correspondingly, the AGW receives the third message from the AMF 1.

For example, the AMF 1 sends the third message to the AMF 1 through an AMF service-based interface_communication_N1 message notification (Namf_Communication_N1Message Notify) service.

For more descriptions of S1005b, refer to S740 in the foregoing method 700.

S1006b: The AGW sends a fourth message to the AMF 2.

Correspondingly, the AMF 2 receives the fourth message from the AGW.

After receiving the third message from the AMF 1, the AGW determines, based on the third message, a core network that provides a service for the UE, and sends the fourth message to the AMF 2 in the core network that provides the service for the UE.

For a manner in which the AGW determines, based on the third message, the core network that provides the service for the UE, refer to S660a in the foregoing method 600.

S1007b: The AMF 2 performs a subsequent registration procedure.

After receiving the fourth message from the AGW, the AMF 2 performs the subsequent registration procedure based on the fourth message, so that the UE is registered with a public core network.

After the AMF 2 performs the registration procedure for the UE based on the fourth message, the public core network provides a service for the UE in the following manner:

Manner 1: If the AMF 2 may establish a connection to the RAN, the public core network may provide the service for the UE over the RAN. In other words, a transmission path between the public core network and the UE is UE-RAN-AMF 2.

Manner: If the AMF 2 cannot establish a connection to the RAN, the public core network may provide the service for the UE via the AGW and the AMF 1. In other words, a transmission path between the UE and the public core network is UE-RAN-AMF 1-AGW-AMF 2.

For more descriptions of Manner 1 and Manner 2, refer to the foregoing method 700.

The foregoing describes the methods provided in embodiments of this application in detail with reference to FIG. 4 to FIG. 10. Communication apparatuses provided in embodiments of this application are described below in detail with reference to FIG. 11 to FIG. 13. It should be understood that descriptions of apparatus embodiments correspond to the descriptions of the method embodiments. Therefore, for content that is not described in detail, refer to the method embodiments. For brevity, details are not described herein again.

FIG. 11 is a block diagram of a communication apparatus 1100 according to an embodiment of this application. As shown in FIG. 11, the communication apparatus 1100 may include a transceiver unit 1110 and a processing unit 1120.

In a possible design, the communication apparatus 1100 may be the access gateway in the foregoing method embodiments, or may be a chip configured to implement a function of the access gateway in the foregoing method embodiments.

It should be understood that the communication apparatus 1000 may correspond to the access gateway in the method 400, the method 600, or the method 700 in embodiments of this application, or correspond to the AGW in the method 800, the method 900, or the method 1000. The communication apparatus may include units configured to perform the method performed by the access gateway in the method 400 in FIG. 4, the method 600 in FIG. 6, or the method 700 in FIG. 7; or may include units configured to perform the method performed by the AGW in the method 800 in FIG. 8, the method 900 in FIG. 9, or the method 1000 in FIG. 10. In addition, the units in the communication apparatus 1100 and the foregoing other operations and/or functions are respectively used to implement corresponding procedures of the method 400 in FIG. 4, the method 600 in FIG. 6, the method 700 in FIG. 7, the method 800 in FIG. 8, the method 900 in FIG. 9, or the method 1000 in FIG. 10. It should be understood that a specific process in which the units perform the foregoing corresponding steps is described in detail in the foregoing method embodiments. For brevity, details are not described herein.

In another possible design, the communication apparatus 1100 may be the first access management network element in the foregoing method embodiments, or may be a chip configured to implement a function of the first access management network element in the foregoing method embodiments.

It should be understood that the communication apparatus 1100 may correspond to the first access management network element in the method 600 or the method 700 in embodiments of this application, or correspond to the AMF 1 in the method 900 or the method 1000. The communication apparatus 1100 may include units configured to perform the method performed by the first access management network element in the method 600 in FIG. 6 or the method 700 in FIG. 7, or may include units configured to perform the method performed by the AMF 1 in the method 900 in FIG. 9 or the method 1000 in FIG. 10. In addition, the units in the communication apparatus 1100 and the foregoing other operations and/or functions are respectively used to implement corresponding procedures of the method 600 in FIG. 6, the method 700 in FIG. 7, the method 900 in FIG. 9, or the method 1000 in FIG. 10. It should be understood that a specific process in which the units perform the foregoing corresponding steps is described in detail in the foregoing method embodiments. For brevity, details are not described herein.

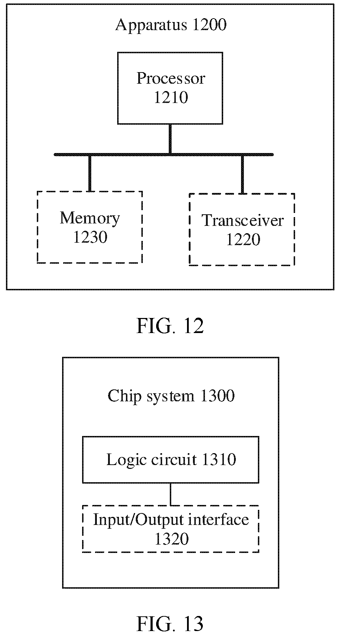

It should be further understood that the transceiver unit 1110 in the communication apparatus 1100 may correspond to a transceiver 1220 in a communication device 1200 shown in FIG. 12, and the processing unit 1120 in the communication apparatus 1100 may correspond to a processor 1210 in the communication device 1200 shown in FIG. 12.

It should be further understood that when the communication apparatus 1100 is a chip, the chip includes a transceiver unit. Optionally, the chip may further include a processing unit. The transceiver unit may be an input/output circuit or a communication interface. The processing unit may be a processor, a microprocessor, or an integrated circuit integrated on the chip.

The transceiver unit 1110 is configured to implement signal receiving and sending operations of the communication apparatus 1100, and the processing unit 1120 is configured to implement a signal processing operation of the communication apparatus 1100.

Optionally, the communication apparatus further includes a storage unit 1130, and the storage unit 1130 is configured to store instructions.

FIG. 12 is a schematic block diagram of an apparatus 1200 according to an embodiment of this application. As shown in FIG. 12, the apparatus 1200 includes at least one processor 1210. The processor 1210 is coupled to a memory, and is configured to execute instructions stored in the memory, to perform the method in FIG. 4, FIG. 6, FIG. 7, FIG. 8, FIG. 9, or FIG. 10. Optionally, the apparatus 1200 further includes a transceiver 1220. The processor 1210 is coupled to the memory, and is configured to execute the instructions stored in the memory, to control the transceiver 1220 to send a signal and/or receive a signal. For example, the processor 1210 may control the transceiver 1220 to send network change information and/or receive network change information. Optionally, the apparatus 1200 further includes a memory 1230, configured to store instructions.

It should be understood that the processor 1210 and the memory 1230 may be integrated into one processing apparatus. The processor 1210 is configured to execute program code stored in the memory 1230, to implement the foregoing functions. During specific implementation, the memory 1230 may alternatively be integrated into the processor 1210, or may be independent of the processor 1210.

It should be further understood that the transceiver 1220 may include a receiver (which is also referred to as a receiver machine) and a transmitter (which is also referred to as a transmitter machine). The transceiver 1220 may further include an antenna. There may be one or more antennas. The transceiver 1220 may alternatively be a communication interface or an interface circuit.

When the apparatus 1200 is a chip, the chip includes a transceiver unit and a processing unit. The transceiver unit may be an input/output circuit or a communication interface. The processing unit may be a processor, a microprocessor, or an integrated circuit integrated on the chip.

FIG. 13 is a diagram of a chip system according to an embodiment of this application. The chip system herein may alternatively be a system including a circuit. A chip system 1300 shown in FIG. 13 includes a logic circuit 1310 and an input/output interface (input/output interface) 1320. The logic circuit is configured to be coupled to an input interface, and transmit data (for example, first timing configuration information) through the input/output interface, to perform the method in FIG. 4, FIG. 6, FIG. 7, FIG. 8, FIG. 9, or FIG. 10.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random register, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

According to the method provided in embodiments of this application, this application further provides a computer program product. The computer program product includes computer program code. When the computer program code is run on a computer, the computer is enabled to perform the method in any one of embodiments shown in FIG. 4 to FIG. 10.

According to the method provided in embodiments of this application, this application further provides a computer-readable medium. The computer-readable medium stores program code. When the program code is run on a computer, the computer is enabled to perform the method in any one of embodiments shown in FIG. 4 to FIG. 10.

According to the method provided in embodiments of this application, this application further provides a system, including the foregoing access gateway and the first access management network element.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer instructions are loaded and executed on the computer, the procedure or functions according to embodiments of this application are all or partially generated. The computer instructions may be stored in a computer-readable storage medium, or may be transmitted from one computer-readable storage medium to another computer-readable storage medium. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network access method, comprising:
receiving, by an access gateway, a first message from an access network device, wherein the first message comprises a registration request of a terminal device, and the registration request comprises an identifier of the terminal device;
determining, by the access gateway based on the first message, a first core network that provides a service for the terminal device, wherein the first core network is a public core network or a dedicated core network; and
sending, by the access gateway, a second message to a first access management network element comprised in the first core network, wherein the second message comprises the registration request.

2. The method according to claim 1, wherein the first core network is the dedicated core network, and determining, by the access gateway based on the first message, the first core network that provides the service for the terminal device comprises:
when determining, based on the identifier of the terminal device, that the identifier of the terminal device is allocated by a second access management network element to the terminal device, determining, by the access gateway, that the first core network provides the service for the terminal device, wherein the second access management network element belongs to the first core network.

3. The method according to claim 1, wherein determining, by the access gateway based on the first message, the first core network that provides the service for the terminal device comprises:
when determining, based on the identifier of the terminal device, that the first core network stores subscription data of the terminal device, determining, by the access gateway, that the first core network provides the service for the terminal device.

4. The method according to claim 1, wherein determining, by the access gateway based on the first message, the first core network that provides the service for the terminal device comprises:
determining, by the access gateway based on the identifier of the terminal device, that the first core network stores subscription data of the terminal device, wherein the subscription data comprises type information of the terminal device, and the type information indicates that the terminal device is of a public network subscriber type or a dedicated network subscriber type; and
when determining, based on the type information, that the terminal device belongs to a subscriber type of the first core network, determining, by the access gateway, that the first core network provides the service for the terminal device.

5. The method according to claim 1, wherein the first message further comprises location information of the terminal device, the location information comprises information about a tracking area and/or information about a cell on which the terminal device camps, the access gateway is configured with one or more of a tracking area identifier list of the first core network and a new radio cell global identifier list of the first core network, and determining, by the access gateway based on the first message, the first core network that provides the service for the terminal device comprises:
when the terminal device determines, based on the identifier of the terminal device, that the first core network stores subscription data of the terminal device, and the tracking area in the location information of the terminal device is comprised in the tracking area identifier list of the first core network, or the cell in the location information of the terminal device is comprised in the new radio cell global identifier list of the first core network, determining, by the access gateway, that the first core network provides the service for the terminal device.

6. The method according to claim 1, wherein the first message further comprises an identifier of a network slice requested by the terminal device, the access gateway is configured with a list of identifiers of network slices supported by the first core network, and determining, by the access gateway based on the first message, the first core network that provides the service for the terminal device comprises:
when determining, based on the identifier of the terminal device, that the first core network stores subscription data of the terminal device, and determining, based on the identifier of the network slice requested by the terminal device, that the identifier of the network slice is comprised in the list of identifiers of network slices supported by the first core network, determining, by the access gateway, that the first core network provides the service for the terminal device.

7. The method according to any one of claims 3 to 6, wherein the method further comprises:
sending, by the access gateway, a first request message to a first policy management network element or a first data management network element, wherein the first request message comprises the identifier of the terminal device, and the first request message is used to query whether the terminal device has subscribed to the first core network; and
receiving, by the access gateway, a response message from the first policy management network element or the first data management network element, wherein the response message indicates that the terminal device has subscribed to the first core network.

8. The method according to claim 4, wherein the method further comprises:
sending, by the access gateway, a second request message to a first policy management network element or a first data management network element, wherein the second request message comprises the identifier of the terminal device, and the second request message is used to request the type information of the terminal device; and
receiving, by the access gateway, the type information of the terminal device from the first policy management network element or the first data management network element.

9. The method according to any one of claims 1 to 8, wherein the access gateway is configured with a subscriber list of the first core network, and determining, by the access gateway based on the first message, the first core network that provides the service for the terminal device comprises:
when determining, based on the identifier of the terminal device and the subscriber list of the first core network, that the terminal device is a subscriber of the first core network, determining, by the access gateway, that the first core network provides the service for the terminal device.

10. A network access method, comprising:
receiving, by an access gateway, a third message from a first access management network element, wherein the third message comprises an identifier of a terminal device, and the first access management network element belongs to a first core network; and the third message is a registration reject message, or the third message comprises a registration request of the terminal device, and the registration request comprises the identifier of the terminal device; and
sending, by the access gateway, a fourth message to a third access management network element based on the third message, wherein the fourth message comprises the registration request of the terminal device, and the third access management network element belongs to a second core network.

11. The method according to claim 10, wherein the third message is the registration reject message, and before receiving, by the access gateway, the third message from the first access management network element, the method further comprises:
receiving, by the access gateway, a first message from an access network device, wherein the first message comprises the registration request of the terminal device, and the registration request comprises the identifier of the terminal device;
sending, by the access gateway, the fourth message to the first access management network element based on the first message, wherein the fourth message comprises the registration request; and
storing, by the access gateway, the fourth message; and
sending, by the access gateway, the fourth message to the third access management network element based on the third message comprises:
sending, by the access gateway based on the identifier of the terminal device comprised in the third message, the fourth message stored by the access gateway to the third access management network element.

12. The method according to claim 11, wherein the third message further comprises a reject cause value, and the reject cause value indicates that the terminal device is not a subscriber of the first core network.

13. The method according to claim 10, wherein the third message comprises the registration request of the terminal device, the third message further comprises location information of the terminal device, the location information comprises information about a tracking area and/or information about a cell on which the terminal device camps, the access gateway is configured with one or more of a tracking area identifier list of the second core network and a new radio cell global identifier list of the second core network, and sending, by the access gateway, the fourth message to the third access management network element based on the third message comprises:
when the tracking area in the location information of the terminal device is comprised in the tracking area identifier list of the second core network, or the cell in the location information of the terminal device is comprised in the new radio cell global identifier list of the second core network, sending, by the access gateway, the fourth message to the third access management network element.

14. The method according to claim 10, wherein the third message comprises the registration request of the terminal device, the third message further comprises an identifier of a network slice requested by the terminal device, the access gateway is configured with a list of identifiers of network slices supported by the second core network, and sending, by the access gateway, the fourth message to the third access management network element based on the third message comprises:
when determining, based on the identifier of the network slice requested by the terminal device, that the identifier of the network slice is comprised in the list of identifiers of network slices supported by the first core network, sending, by the access gateway, the fourth message to the third access management network element.

15. The method according to claim 10, wherein the third message comprises the registration request of the terminal device, and the third message further comprises one or more of the following:
an identifier of the second core network;
an identifier of a network slice of the second core network; and
an access management network element set identifier, wherein the access management network element set identifier is used by the access gateway to determine the second core network; and
sending, by the access gateway, the fourth message to the third access management network element based on the third message comprises:
when determining the third access management network element based on the third message, sending, by the access gateway, the fourth message to the third access management network element.

16. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 1 to 9.

17. A communication apparatus, comprising at least one processor, wherein the at least one processor is coupled to at least one memory, and the at least one processor is configured to execute a computer program or instructions stored in the at least one memory, to cause the communication apparatus to perform the method according to any one of claims 10 to 15.

18. A chip, comprising a processor and a communication interface, wherein the communication interface is configured to: receive data and/or information, and transmit the received data and/or information to the processor; and the processor processes the data and/or information, to perform the method according to any one of claims 1 to 9 or the method according to any one of claims 10 to 15.

19. A computer-readable storage medium, wherein the computer-readable storage medium stores computer instructions, and when the computer instructions are run on a computer, the method according to any one of claims 1 to 9 or the method according to any one of claims 10 to 15 is implemented.

20. A computer program product, wherein the computer program product comprises computer program code, and when the computer program code is run on a computer, the method according to any one of claims 1 to 9 or the method according to any one of claims 10 to 15 is implemented.
